# EUROPÄISCHE PATENTSCHRIFT

(11) **EP 0 879 370 B1**
(45) Veröffentlichungstag und Bekanntmachung des Hinweises auf die Patenterteilung: **04.09.2002**
(21) Anmeldenummer: 97951991.5
(22) Anmeldetag: 27.11.1997
(51) Int. Cl.: F16H 45/00, B60T 1/087, F16D 33/06, F16H 61/04, F16H 61/64

(54) **GETRIEBEBAUEINHEIT, VERFAHREN ZUM BETREIBEN EINER IN EINEN ANTRIEBSSTRANG INTEGRIERTEN GETRIEBEBAUEINHEIT UND HYDRODYNAMISCHE BAUEINHEIT**
TRANSMISSION UNIT, METHOD TO DRIVE A TRANSMISSION UNIT INTEGRATED INTO A DRIVE TRAIN, AND HYDRODYNAMIC UNIT
UNITE DE TRANSMISSION, PROCEDE PERMETTANT D'ACTIONNER UNE UNITE DE TRANSMISSION INTEGREE DANS UNE CHAINE CINEMATIQUE ET UNITE HYDRODYNAMIQUE

(30) Priorität: 04.12.1996 DE 19650339; 15.01.1997 DE 29700605 U
(43) Veröffentlichungstag der Anmeldung: 25.11.1998
(73) Patentinhaber: Voith Turbo GmbH & Co. KG, 89522 Heidenheim (DE)
(72) Erfinder: NITSCHE, Martin, D-89547 Gerstetten (DE); ENGLISCH, Andreas, D-89522 Heidenheim (DE)
(74) Vertreter: Dr. Weitzel & Partner
(86) Internationale Anmeldenummer: EP9706623
(87) Internationale Veröffentlichungsnummer: WO98025053

(56) Entgegenhaltungen:
- CH-A- 160 832
- GB-A- 2 018 374
- US-A- 4 413 535
- US-A- 4 583 426

## Beschreibung

Die Erfindung betrifft eine Getriebebaueinheit, im einzelnen mit den Merkmalen aus dem Oberbegriff der Ansprüche 1 und 8; ein Verfahren zum Betreiben einer in einen Antriebsstrang integrierten Getriebebaueinheit, im einzelnen mit den Merkmalen aus Anspruch 22; ferner eine hydrodynamische Baueinheit (Anspruch 28).

Getriebebaueinheiten, die neben einem mechanischen Getriebeteil einen hydraulischen, vorzugsweise einen hydrodynamischen Getriebeteil umfassen, sind in einer Vielzahl von Ausführungen allgemein bekannt. Der hydrodynamische Getriebeteil kann dabei als hydrodynamische Kupplung oder als hydrodynamischer Wandler ausgeführt sein. Diese, auch als Strömungsgetriebe bezeichneten Baueinheiten, umfassen wenigstens ein Pumpenrad und ein Turbinenrad, welche miteinander wenigsten einen torusförmigen Arbeitsraum bilden. Dieser ist mit Betriebsflüssigkeit befüllbar. Die Flüssigkeit wird über das Pumpenrad beschleunigt und in der Turbine wieder verzögert. Das erzeugte Drehmoment wird demnach im wesentlichen durch Massenkräfte verursacht, die sich aus der Geschwindigkeitsänderung des Flüssigkeitsstromes ergeben. Die übertragene Leistung ist dann das Produkt aus der Dralländerung des Massestromes und der Winkelgeschwindigkeit. Ein hydrodynamischer Wandler besteht des weiteren neben Pumpen- und Turbinenrad noch aus einem Reaktionsglied, welches als Leitrad bezeichnet wird. Dieses Leitrad ist dabei in der Lage ein Moment aufzunehmen. Da die Summe der Momente im Kreislauf gleich null sein muß, kann das Turbinenmoment je nach Größe und Drehsinn des Leitradmomentes größer, gleich oder kleiner dem Pumpmoment sein. Dadurch läßt sich zusätzlich zu einer Anordnung mit lediglich Pumpen- und Turbinenrad, welche auch als hydrodynamische Kupplung bezeichnet wird, der Drehzahlbereich und das Drehmoment des Turbinenrades gegenüber dem Pumpenrad stark variieren.

Die Möglichkeit, hydrodynamisch Leistung zu übertragen, bietet den Vorteil, mit einem relativ hohen Wirkungsgrad, geringem Verschleiß und mit klein bauenden Baueinheiten große Leistungen zu übertragen. Desweiteren werden diese Baueinheiten hauptsächlich während eines Anlauf- beziehungsweise bei Fahrzeugen eines Anfahrvorganges eines von einer Antriebsmaschine anzutreibenden Verbrauchers genutzt. Bei Ausführungen von Getriebebaueinheiten mit einem hydrodynamischen Getriebeteil in Form einer hydrodynamischen Kupplung und mit nachgeschalteten Gangstufen übernimmt die hydrodynamische Kupplung die Funktion der Anlaufkupplung. Die Drehmomenten- beziehungsweise die Leistungsübertragung erfolgt somit nur während einer ersten Gangstufe, in der Regel dem Anfahrvorgang, über die hydrodynamische Baueinheit. In den anderen Gangstufen wird das hydrodynamische Bauelement von der Leistungsübertragung ausgeschlossen. Zusätzlich kann der Getriebebaueinheit ein weiteres hydrodynamisches Bauelement in Form eines hydrodynamischen Retarders zur Realisierung von Bremsstufen zugeordnet und entweder im Getriebe integriert oder diesem nachgeschaltet werden. Die gleiche Aufgabe kann auch von hydrodynamischen Wandlern übernommen werden, wobei diese in den unteren Gangstufen mit Leistungsverzweigung mit den mechanischen Getriebestufen arbeiten können. Dabei wird der hydrodynamische Wandler in der Regel während des Anfahrvorganges allein als Anfahrelement genutzt. In den übrigen Gangstufen wird die Leistung entweder rein mechanisch unter Umgehung des hydrodynamischen Wandlers oder aber zumindest in den unteren Gangstufen über den hydrodynamischen Wandler und die mechanischen Getriebestufen übertragen.

Die gegenwärtige Entwicklung im Fahrzeugbau ist von zum Teil widersprüchlichen Tendenzen gekennzeichnet. Neben dem Trend nach größerem Raumangebot, mehr Komfort und einem besseren Beschleunigungs- und Verzögerungsverhalten aus Gründen der Sicherheit bei allen Fahrzuständen, gewinnt der Aspekt des Umweltschutzes immer mehr an Bedeutung. Eine Möglichkeit zur Verringerung der durch Fahrzeuge verursachten CO₂-Emission kann durch eine Verbesserung der Energieumwandlung zwischen Motor und Verbraucher im Antriebsstrang erzielt werden. Außerdem geht der Trend zu Motoren mit kleinerem Hubraum, d.h. die Momente werden kleiner und die Nenndrehzahlen größer. Daran sind auch die Anforderungen an Fahrzeuggetriebe zu messen. Als wesentliche Beurteilungskriterien für die Güte eines Getriebes werden dabei
- die Fahrleistung, welche durch den Wandlungsbereich bestimmt ist,
- die Gangzahl und Getriebestufung sowie
- der Kraftstoffverbrauch, beeinflußt durch die Auslegung der Antriebsübersetzung im obersten Gang und der Wirkungsgrad des Getriebes, angesehen.

Für Getriebe sind daher ein optimaler Wirkungsgrad und ein Wandlungsbereich bei einer Gangstufung, die weitestgehend die Benutzung des Motorbestbereiches beziehungsweise der Minimalverbrauchslinie im Motorkennfeld ermöglicht, anzustreben. Insbesondere läßt sich durch eine Erhöhung der Getriebespreizung in angepaßter Stufung eine Senkung des Kraftstoffverbrauches, insbesondere der Schadstoffemission und der Aggregatgeräusche herbeiführen.

Die heute auf dem Markt befindlichen Automatgetriebe erfüllen diese genannten Aufgaben zum Teil schon recht gut. Jedoch erfordert der Betrieb der Verbrennungskraftmaschine im Bereich des geringsten Kraftstoffverbrauches und der geringsten Schadstoffemission eine ausreichende Stufung, so daß heute im Fahrzeugbereich 5- und 6-Gang-Getriebe keine Seltenheit mehr sind. Damit erhöht sich oft auch die Anzahl der Getriebeelemente. Zusätzlich sind entsprechend des Aufbaus des Getriebes weitere Bauelemente zur Realisierung einzelner weiterer Funktionen, beispielsweise der Erzeugung eines Bremsmomentes, erforderlich. In der Regel wird bei Getriebekonfigurationen mit hydrodynamischer Kupplung oder hydrodynamischen Wandler und einem mechanischen Getriebeteil dazu häufig ein hydrodynamische Retarder verwandt, wobei jedoch Mittel vorzusehen sind, welche im Leerlauf des Rotorschaufelrades die Ventilationsverluste verringern, da bei völlig geleertem Retarder immer ein Restmoment vorhanden ist, das durch Lagerreibung und durch die Dralländerung der Luftfüllung bedingt ist. Das durch das Restmoment bedingte Bremsmoment ist zwar sehr gering, kann sich jedoch bei hohen Drehzahlen sehr störend auswirken und zu einer unzulässig hohen Erwärmung des Retarders führen. Zur Verringerung der Ventilationsverluste sind bereits eine Reihe von Lösungen bekannt. Dazu gehören u.a. die Verwendung von Statorbolzen sowie die Möglichkeit einer Kreislaufevakuierung. Diese Lösungen sind jedoch sehr aufwendig in ihrer Umsetzung und bedingen einen erhöhten Platzbedarf und damit größere Retarderabmessungen. Es sind jedoch auch Getriebekonfigurationen mit hydrodynamischen Wandler bekannt, die die Erzeugung des Bremsmomentes mit diesen realisieren.

Aufgrund des Trends zu Motoren mit kleinerem Hubraum, welche einen immer kleiner werdenden Anschlußdurchmesser als bisher verlangen, wird es zunehmend schwieriger, hydrodynamische Wandler zu verwenden, die bei kleinerem Profildurchmesser das vorhandene Motormoment bei geringen Drehzahlen übertragen können. Nachteilig gestaltet sich dabei im einzelnen, daß der Zustand der Übertragungsfähigkeit erst bei hohen Drehzahlen auftritt. Nachdem jedoch zum Anfahren aber Moment und nicht Leistung benötigt wird, entsteht durch die überhöhten Drehzahlen ein Leistungsverlust, der sich in einem erhöhten Kraftstoffverbrauch niederschlägt. Die damit verbundenen lauten Motorgeräusche belasten die Umwelt.

Beim Bremsen bleibt bei den bekannten Konfigurationen die Verbrennungskraftmaschine an das Fahrzeug, d. h. den Abtrieb des Getriebes angekoppelt und verursacht durch unnötig hohe Drehzahlen ebenfalls Geräusche.

Die bekannten Getriebe weisen des weiteren entsprechend der zu erzielenden Gesamtspreizung und Anpassung an verschiedene Verbrennungskraftmaschinen und der damit verbundenen Gestaltung der Beschaufelungen der einzelnen Elemente eine große Variantenvielfalt auf. Aus der Druckschrift CH 160 832 ist ein hydraulisches Getriebe in Form eines hyrdodynamischen Drehzahl-/Drehmomentwandlers bekannt, wobei jedem der Funktionsräder - Pumpenrad, Turbinenrad und Leitrad jeweils drei Kupplungs- oder Bremselemente zugeordnet sind, die eine Kopplung mit der An- oder Abtriebswelle ermöglichen und des weiteren bei Ausnutzung des hydrodynamischen Drehzahl-/Drehmomentwandlers als hydrodynamischer Retarder ein Festsetzen ermöglichen. Dies bedeutet, daß jedem der einzelnen Räder zwei Kupplungseinrichtungen zur Kopplung an die An- und Abtriebswelle sowie eine Bremseinrichtung zur Festsetzung des entsprechenden Rades zuzuordnen ist. Eine gemeinsame Nutzung von Bremseinrichtungen ist dabei nicht und von Kupplungseinrichtungen nur sehr bedingt möglich, wobei es sich dabei um eine einzige Kupplungseinrichtung handelt, die zum einen zur Kopplung eines Primärrades mit der Getriebeausgangswelle und des weitem dem Sekundärrad mit der Getriebeausgangswelle dient. Alle anderen Kupplungseinrichtungen sind zusätzlich erforderlich. Dies bedeutet einen erhöhten konstruktiven Aufwand und des weiteren auch einen steuerungstechnischen, da für die einzelnen Funktionsweisen als hydrodynamische Kupplung, hydrodynamischer Drehzahl/Drehmomentwandler oder hydrodynamische Bremseinrichtung jeweils immer drei der angesprochenen Elemente betätigt werden müssen. Die Betätigung muß daher auch optimal aufeinander abgestimmt werden, da ansonsten der Fahrkomfort erheblich leidet.

Der Erfindung lag daher die Aufgabe zugrunde, die Komponente Getriebe zum Einsatz in einem Antriebsstrang dahingehend zu verbessern, daß die genannten Nachteile weitestgehend vermieden werden. Im einzelnen sind eine universelle Einsetzbarkeit, welche sich durch die Erzeugbarkeit ausreichender Fahr- und Bremsmomente, die Anpassung an eine Vielzahl von Motoren ohne Teilevielfalt sowie eine große mechanische Spreizung auszeichnet, und eine Erhöhung der Umweltverträglichkeit, insbesondere geringe Geräusche beim Anfahren, anzustreben. Die Baukomponentenanzahl und der steuerungstechnische Aufwand ist möglichst gering zu halten.

Des weiteren soll mit einer Getriebekonfiguration mit geringer Variantenanzahl ein großer Bereich möglicher Einsatzfälle abgedeckt werden können.

Die Aufgabe wird durch die Merkmale der Ansprüche 1, 8, 22 und 28 gelöst. Vorteilhafte Ausgestaltungen sind in den Unteransprüchen wiedergegeben.

Eine Getriebebaueinheit für Antriebseinheiten zur Realisierung wenigstens zweier Betriebszustände - einen ersten Betriebszustand zur Leistungsübertragung mit wenigstens zwei Gangschaltstufen und einen zweiten Betriebszustand zur Abbremsung - umfaßt wenigstens einen ersten hydraulischen Getriebeteil und einen zweiten, in Reihe zum ersten hydraulischen Getriebeteil angeordneten mechanischen Getriebeteil. Der hydraulische Getriebeteil umfaßt wenigstens zwei Schaufelräder - ein Primärschaufelrad und ein Sekundärschaufelrad, die miteinander wenigsten einen torusförmigen, mit Betriebsmittel befüllbaren Arbeitsraum bilden, wobei die Ankoppelung der beiden Schaufelräder an die Getriebeeingangswelle und den mechanischen Getriebeteil wenigstens über einen Teilbereich des ersten Betriebszustandes derart erfolgt, daß Leistung vom Primärschaufelrad über das Sekundärschaufelrad auf den mechanischen Getriebeteil übertragen wird. Erfindungsgemäß sind Mittel vorgesehen, welche in einem zweiten Betriebszustand eines der beiden Schaufelräder gegenüber den feststehenden Getriebeteilen festhalten und abstützen und das andere Schaufelrad mit dem zweiten mechanischen Getriebeteil verbinden. D.h. es wird eine als Automatgetriebe einsetzbare Getriebebaueinheit dahingehend modifiziert, daß die Funktionen einer hydrodynamischen Kupplung und eines hydrodynamischen Retarders von einem einzigen Bauelement, dem hydrodynamischen Getriebeelement übernommen werden.

Zur Realisierung der Funktion eines hydrodynamischen Retarders sind folgende zwei Grundvarianten denkbar:
1) Zuordnung der Funktion des Statorschaufelrades durch Festsetzung gegenüber den ruhenden Getriebeteilen zum Primärschaufelrad und der Funktion des Rotorschaufelrades zum Sekundärschaufelrad;
2) Zuordnung der Funktion des Statorschaufelrades durch Festsetzung gegenüber den ruhenden Getriebeteilen zum Sekundärschaufelrad und der Funktion des Rotorschaufelrades zum Primärschaufelrad.
Das die Funktion des Rotorschaufelrades übernehmende Schaufelrad ist in beiden Fällen mit der Getriebeausgangswelle über den mechanischen Getriebeteil gekoppelt. Dementsprechend sind auch die Kopplungsmöglichkeiten zwischen dem hydraulischen und mechanischen Getriebeteil bei der Gestaltung der Getriebebaueinheit vorzusehen.

Beim hydrodynamischen Getriebeelement handelt es sich somit im Grundaufbau um eine hydrodynamische Kupplung, welche wenigstens im Anfahrbereich die Getriebeeingangswelle wenigstens mittelbar mit der Getriebeausgangswelle verbindet und in allen anderen Gangstufen entsprechend der Feststellung eines der beiden Schaufelräder und der Anbindung des anderen zweiten Schaufelrades an den mechanischen Getriebeteil zur Erzeugung eines Bremsmomentes verwendet werden kann. Dies bietet vor allem den Vorteil, daß Bauraum eingespart und die Herstellungskosten gesenkt werden können.

Zur Realisierung des zweiten Betriebszustandes nach der ersten Grundvariante ist das Sekundärschaufelrad drehfest mit dem mechanischen Getriebeteil verbunden. Es sind erste Mittel vorgesehen, mittels deren das Primärschaufelrad in einem ersten Betriebszustand, welcher der Leistungsübertragung dient und beim Einsatz des Getriebes in Fahrzeugen als "Fahren" bezeichnet wird, an die Getriebeeingangswelle wenigstens mittelbar ankoppelbar ist, Des weiteren sind zweite Mittel zur wenigstens mittelbaren Koppelung des Sekundärschaufelrades mit der Getriebeeingangswelle während der übrigen Gangstufen des ersten Betriebszustandes vorgesehen. Der erste Betriebszustand umfaßt dabei die Vorwärts- und Rückwärtsgangstufen.

Die Anbindung des Primärschaufelrades an die Getriebeeingangswelle erfolgt beispielsweise mittels einer sogenannten Primärschaufelradkupplung. Die Feststellung des Primärschaufelrades gegenüber den ruhenden bzw. feststehenden Getriebeteilen, insbesondere dem Getriebegehäuse, erfolgt vorzugsweise mittels wenigstens einem Bremselement. Desweiteren ist im Getriebe eine sogenannte Überbrückungskupplung vorgesehen, welche die Getriebeeingangswelle direkt mit dem Sekundärschaufelrad unter Umgehung des Primärschaufelrades verbindet. Dadurch wird erzielt, daß bei Befüllung des hydraulischen Getriebeteiles im ersten Betriebszustand, vorzugsweise lediglich in einer ersten Gangstufe, welche auch als Anfahrstufe bezeichnet wird, das Primärschaufelrad die Funktion des Pumpenrades einer hydrodynamischen Kupplung übernimmt. Das Primärschaufelrad wird angetrieben und über die aufgrund der Primärschaufelradrotation erzeugten Strömungskräfte Drehmoment auf das, die Funktion des Turbinenrades übernehmende Sekundärschaufelrad übertragen. In den übrigen Gangstufen im ersten Betriebszustand (d. h. der Vorwärtsgänge und zum Teil auch der Rückwärtsgänge) bleibt das hydrodynamische Getriebeelement im wesentlichen unbefültt. Das Sekundärschaufelrad wird dann direkt über die Überbrückungskupplung von der Getriebeeingangswelle angetrieben. Bei vollständiger Entkoppelung des Primärschaufelrades von der Getriebeeingangswelle würde dies jedoch dazu führen, daß während dieser Betriebszustände zwischen beiden Schaufelrädern im torusförmigen Arbeitsraum das Medium Luft wie ansonsten im befüllten Zustand das Betriebsmittel umgewälzt wird. Zu diesem Zweck ist vorzugsweise vorgesehen, daß das Primärschaufelrad während der weiteren Gangstufen im ersten Betriebszustand mit dem Sekundärschaufelrad mit gleicher Drehzahl beziehungsweise mit gleicher Geschwindigkeit umläuft. Der durch den Antrieb des Primärschaufelrades dem Abtrieb entzogene Leistungsanteil ist relativ gering und lediglich abhängig vom Gewicht des mitzuschleppenden Primärschaufelrades. Die Leerlaufverluste werden somit erheblich reduziert.

Im zweiten Betriebszustand "Bremsen" wird der im ersten Betriebszustand als Kupplung arbeitende hydraulische Getriebeteil als hydrodynamischer Retarder betrieben. Dabei übernimmt das Primärschaufelrad die Funktion des Statorschaufelrades, in dem dieses gegenüber den ruhenden Getriebeteilen festgesetzt und abgestützt wird.
Zur Realisierung der Funktionsänderung zwischen Leistungsübertragung und Bremsen entsprechend der ersten Grundvariante sind im wesentlichen die zwei nachfolgend genannten Möglichkeiten denkbar. Das Sekundärschaufelrad wird entweder
1.1) über den Abtrieb mit gleicher Drehrichtung bei möglicher Verbindung zwischen mechanischen Getriebeteil und Getriebeeingangswelle oder
1.2) von Seiten des Abtriebes bei gelöster Verbindung zwischen Sekundärschaufelrad und Getriebeeingangswelle oder der mit der Getriebeeingangswelle gekoppelten Antriebswelle mit umgekehrter Drehrichtung bezogen auf seine Drehrichtung während des Anfahrvorganges
angetrieben und übernimmt die Funktion des Rotorschaufelrades eines hydrodynamischen Retarders. In diesem Betriebszustand ist der hydraulische Getriebeteil, d.h. das hydrodynamische Getriebeelement wenigstens zum Teil mit Betriebsmittel gefüllt. Dieses wird aufgrund der Sekundärschaufelradrotation im zwischen Primär- und Sekundärschaufelrad gebildeten Arbeitsraum umgewälzt und an der feststehenden Beschaufelung des Primärschaufelrades abgebremst. Zur Feststellung des Primärschaufelrades sind Mittel vorgesehen, die dieses in seiner Lage unveränderlich gegenüber den ruhenden bzw. feststehenden Getriebeteilen festhalten und abstützen.

Bei der erstgenannten Möglichkeit der Funktionsänderung ist das hydrodynamische Getriebeelement zur Erzeugung eines Bremsmomentes befüllt und das Sekundärschaufelrad bleibt über die eingelegte Gangstufe mit der Getriebeausgangswelle gekoppelt. Aufgrund des Schiebebetriebes von Seiten des Abtriebes wird das Sekundärschaufelrad von diesem angetrieben und zwar ohne Änderung der Drehrichtung bezogen auf die Drehrichtung im Anfahrvorgang.

Die Beschaufelung der beiden Schaufelräder ist vorzugsweise schräg ausgeführt, d.h. die Schaufeln sind gegenüber der Trennebene zwischen dem Primär- und dem Sekundärschaufelrad geneigt angeordnet. Die Schaufelrichtung, d.h. die Neigung der einzelnen Schaufeln gegenüber dem jeweiligen Schaufelgrund ist derart gewählt, daß im ersten Betriebszustand, insbesondere während der Anfahrstufe, das Betriebsmittel vom Zwischenraum zweier benachbarter Schaufeln des von der Getriebeeingangswelle angetriebenen Primärschaufelrades aufgrund von dessen Rotation an den Schaufelrückseiten des Sekundärschaufelrades umgelenkt wird, d.h. ein geschlossener Betriebsmittelkreislauf zwischen Primär- und Sekundärschaufelrad ausgebildet und dadurch Drehmoment übertragen wird. Der Begriff Schaufelrückseite bezieht sich dabei auf die Beschaufelung in Drehrichtung. Diese Arbeitsweise des Primärschaufelrades gegenüber dem Sekundärschaufelrad wird als "spießend" bezeichnet. Auch im Betriebszustand "Bremsen" ist das hydrodynamische Getriebeelement mit Betriebsmittel befüllt. Die eingelegte Gangstufe wird bei der erstgenannten Möglichkeit im mechanischen Getriebeteil beibehalten. Das Primärschaufelrad wird festgesetzt und das Sekundärschaufelrad wird in gleichläufiger Richtung über das Fahrzeug, insbesondere die Getriebeausgangswelle angetrieben. Die beiden Schaufelräder tauschen ihre Funktionen. Angetrieben wird jetzt das Sekundärschaufelrad, und zwar in der gleichen Drehrichtung wie das Primärschaufelrad während der Anfahrstufe. Das Primärschaufelrad wird festgesetzt und übernimmt damit die Funktion eines Stators eines hydrodynamischen Retarders. Aufgrund der gegenüber der Trennebene zwischen Primär- und Sekundärschaufelrad schräg ausgerichteten Beschaufelung kann nur ein Teil der durch Rotation des Sekundärschaufelrades erzeugten Strömungsenergie des Betriebsmittels zur Erzeugung eines Bremsmomentes genutzt und damit in Wärme umgesetzt werden. Die Arbeitsweise des Sekundärschaufelrades in diesem Betriebszustand kann als "fliehend" gegenüber dem als Statorschaufelrad fungierenden Primärschaufelrad bezeichnet werden. Diese Art der Realisierung der Erzeugung eines Bremsmomentes durch Funktionsänderung der beiden Schaufelräder - Primär- und Sekundärschaufelrad - kann ohne zusätzlichen Aufwand aus der eingelegten Gangstufe heraus erfolgen. Im einzelnen sind lediglich Mittel vorzusehen, welche ein Festsetzen des Primärschaufelrades ermöglichen. Eine derartige Ausführung ist daher sehr kostengünstig.

Vorzugsweise wird zur Verringerung der Geräuschentwicklung während des Betriebszustandes Bremsen die Antriebsmaschine vom Sekundärschaufelrad entkoppelt, d.h., beispielsweise wird die Verbindung zwischen Sekundärschaufelrad und Getriebeeingangswelle oder aber zwischen Getriebe und Antriebsmaschine gelöst.

Das bei schräg ausgeführter Beschaufelung am Primärschaufelrad erzeugte Reaktionsmoment, welches zur Abbremsung des mit dem Sekundärschaufelrad über den mechanischen Getriebeteil verbundenen Abtriebes führt, ist jedoch geringer, als bei einer "spießenden" Arbeitsweise des Sekundärschaufelrades gegenüber dem Primärschaufelrad. Daher wird vorzugsweise zur Erzeugung eines Bremsmomentes die Drehrichtung des Sekundärschaufelrades, welches im Betriebszustand "Bremsen" als Rotorschaufelrad fungiert, umgekehrt. Diese zweite Möglichkeit wird durch Aktivierung wenigstens einer, den einzelnen Gangstufen zuordenbaren Umkehrstufe oder aber der Aktivierung der Gangstufen zur Realisierung einer zum normalen Fahrbetrieb entgegengesetzten Drehrichtung des Sekundärschaufelrades, d.h. eines Rückwärtsganges, realisiert. Aufgrund der schrägen Beschaufelung bildet sich dann ein geschlossener Kreislauf von Betriebsmittel zwischen dem in diesem Betriebszustand als Rotorschaufelrad fungierenden Sekundärschaufelrad und dem als Statorschaufelrad fungierenden Primärschaufelrad aus. Das angetriebene Sekundärschaufelrad verwandelt die eingeleitete mechanische Energie bei gefülltem Kreislauf in Strömungsenergie, die am stehenden Primärschaufelrad in Wärmeenergie umgesetzt wird. Diese bevorzugte Möglichkeit der Funktionsänderung des hydrodynamischen Getriebeelementes bietet den Vorteil, daß durch eine Übersetzung des sekundärseitigen Schaufelrades ins Schnelle und in Verbindung mit der von den Anforderungen an das hydrodynamische Bauelement beim Anfahrvorgang herrührenden großen Übertragungsfähigkeit der Kreislaufteile ein großer Geschwindigkeitsbereich entsteht, welcher mit einem Bremszustand abgedeckt werden kann und zwar durch Änderung des Füllungsgrades. Die Steuerung des Bremsmomentes kann wie bei einem herkömmlichen Sekundärretarder, d.h. einem im Getriebe integrierten oder diesem nachgeschalteten hydrodynamischen Retarder, über eine Änderung des Füllungsgrades erfolgen. Bezüglich der Möglichkeiten der Füllungsgradänderung und deren Realisierung im einzelnen wird auf die Publikation "Hydrodynamik in der Antriebstechnik", Krauskopf-Verlag 1987 verwiesen. Der Offenbarungsgehalt dieser Druckschrift zur Füllungsgradänderung von hydrodynamischen Bremseinrichtungen wird in den Offenbarungsgehalt dieser Anmeldung mit einbezogen.

Wird das Sekundärschaufelrad, das heißt das Turbinenrad im Bremszustand in seiner Drehrichtung umgekehrt, damit ein spießender Betrieb der Kreislaufanteile entsteht, bleibt im Vergleich zu bekannten Getriebekonfigurationen der mechanische Getriebeteil davon unberührt. Es wird nur die Turbine beziehungsweise das Sekundärschaufelrad in seiner Drehzahl verändert. Die Übersetzung zum Abtrieb kann durch die entsprechende Wahl beispielsweise des Außenkranzes des Ausgangs-Planetenradsatzes unabhängig von den Übersetzungen in den einzelnen Gangstufen des ersten Betriebszustandes gewählt werden. Während des gesamten Bremsbereiches muß nicht geschaltet werden, das heißt von einer maximalen Geschwindigkeit bis zur minimalen Geschwindigkeit werden die Bremsmomente wie bei einem Sekundärretarder ausschließlich stufenlos über die Füllung verstellt, mit dem Vorteil, daß ohne einen zusätzlichen Hochtrieb mit der gewählten Anordnung weiter zu kleineren Geschwindigkeiten herab als sonst möglich gebremst werden kann. Damit wird ein größerer Bremsbereich mit der verschleißlosen hydrodynamischen Bremse überdeckt. Das Sekundärschaufelrad ist im Falle der Erzeugung eines Bremsmomentes durch Drehrichtungsumkehr des Sekundärschaufelrades von der Antriebsmaschine entkoppelt. Dazu ist bei der oben beschriebenen Getriebekonfiguration vorzugsweise die Überbrückungskupplung gelöst. Denkbar ist jedoch auch, die Durchkupplung zwischen Getriebeeingangswelle und mechanischem Getriebeteiles betätigt zu lassen und lediglich die Getriebeeingangswelle von der Antriebsmaschine zu entkoppeln.

Die Anbindung des Primärschaufelrades an die Getriebeeingangswelle erfolgt beispielsweise mittels einer sogenannten Primärschaufelradkupplung. Die Feststellung des Primärschaufelrades gegenüber den ruhenden bzw. feststehenden Getriebeteilen, insbesondere dem Getriebegehäuse, erfolgt vorzugsweise mittels wenigstens einem Bremselement. Desweiteren ist im Getriebe eine sogenannte Überbrückungskupplung vorgesehen, welche die Getriebeeingangswelle direkt mit dem Sekundärschaufelrad unter Umgehung des Primärschaufelrades verbindet. Dadurch wird erzielt, daß bei Befüllung des hydraulischen Getriebeteiles im ersten Betriebszustand, vorzugsweise lediglich in einer ersten Gangstufe, welche auch als Anfahrstufe bezeichnet wird, das Primärschaufelrad die Funktion des Pumpenrades einer hydrodynamischen Kupplung übernimmt. Das Primärschaufelrad wird angetrieben und über die aufgrund der Primärschaufelradrotation erzeugten Strömungskräfte Drehmoment auf das, die Funktion des Turbinenrades übernehmende Sekundärschaufelrad übertragen. In den übrigen Gangstufen im ersten Betriebszustand (d. h. der Vorwärtsgänge und zum Teil auch der Rückwärtsgänge) bleibt das hydrodynamische Getriebeelement im wesentlichen unbefüllt. Das Sekundärschaufelrad wird dann direkt über die Überbrückungskupplung von der Getriebeeingangswelle angetrieben. Bei vollständiger Entkoppelung des Primärschaufelrades von der Getriebeeingangswelle würde dies jedoch dazu führen, daß während dieser Betriebszustände zwischen beiden Schaufelrädern im torusförmigen Arbeitsraum das Medium Luft wie ansonsten im befüllten Zustand das Betriebsmittel umgewälzt wird. Zu diesem Zweck ist vorzugsweise vorgesehen, daß das Primärschaufelrad während der weiteren Gangstufen im ersten Betriebszustand mit dem Sekundärschaufelrad mit gleicher Drehzahl beziehungsweise mit gleicher Geschwindigkeit umläuft. Der durch den Antrieb des Primärschaufelrades dem Abtrieb entzogene Leistungsanteil ist relativ gering und lediglich abhängig vom Gewicht des mitzuschleppenden Primärschaufelrades. Die Leerlaufverluste werden somit erheblich reduziert.

Eine Getriebebaueinheit, bei welcher die Funktion des Bremsens nach der ersten Grundvariante realisiert wird, d.h. dem Primärschaufelrad wird die Funktion des Statorschaufelrades zugeordnet, wird vorzugsweise dahingehend modifiziert, daß beide Schaufelräder - das Primärschaufelrad und das Sekundärschaufeirad - im Betriebszustand Fahren von der Antriebs- bzw. Getriebeeingangswelle gänzlich entkoppelt sind, d.h. beide Schaufelräder still stehen. Dies bietet den Vorteil, daß Ventilationsverluste aufgrund der Umwälzung von Luft zwischen beiden Schaufelrädern vollständig vermieden werden kann.

Zur Realisierung des zweiten Betriebszustandes "Bremsen" nach der zweiten Grundvariante wird das Sekundärschaufelrad gegenüber den ruhenden Getriebeteilen festgesetzt und an diesen abgestützt. Das Sekundärschaufelrad übernimmt die Funktion des Statorschaufelrades. Das Primärschaufelrad, welches vorzugsweise drehfest mit der Getriebeeingangswelle gekoppelt ist, wird über den Abtrieb mit gleicher Drehrichtung, wie während des Anfahrvorganges angetrieben. Es übernimmt die Funktion des Rotorschaufelrades. Im einzelnen bedeutet dies, daß das Betriebsmittel im torusförmigen Arbeitsraum mit gleicher Strömungsrichtung, wie während des Anfahrvorganges umgewälzt wird, jedoch beim Bremsvorgang auf die feststehende Beschaufelung des Sekundärschaufelrades auftrifft und dadurch abgebremst wird.

Zur konstruktiven Ausgestaltung sind dazu erste Mittel, mittels welcher die Getriebeeingangswelle mit dem zweiten mechanischen Getriebeteil koppelbar ist und zweite Mittel, mittels welcher das Sekundärschaufelrad mit der Verbindung zwischen Getriebeeingangswelle und mechanischen Getriebeteil koppelbar ist, vorgesehen. Weitere dritte Mittel dienen der Festsetzung des Sekundärschaufelrades im zweiten Betriebszustand. Das Primärschaufelrad ist vorzugsweise drehfest mit der Getriebeeingangswelle verbunden.
Die einzelnen Mittel sind auch hier vorzugsweise in Form von Schaltelementen, insbesondere von Lastschaltelementen ausgeführt.
Die ersten und zweiten Mittel umfassen vorzugsweise Kupplungseinrichtungen, die dritten Mittel wenigstens eine Bremseinrichtung.

In dieser bevorzugten Ausführung zur Realisierung des zweiten Betriebszustandes entsprechend der zweiten Grundvariante kann eine Einstellung des Bremsmomentes allein durch die Füllungsgradänderung im torusförmigen Arbeitsraum und Fessetzung des Sekundärschaufelrades erfolgen. Damit ist eine besonders schnelle Realisierung einer Abbremsung möglich.

Vorzugsweise sind die Beschaufelungen von Primär- und Sekundärschaufelrad derart geneigt ausgeführt, daß sich sowohl während des Anfahrvorganges als auch während des zweiten Betriebszustandes eine spießende Arbeitsweise der beiden Schaufelräder ergibt. Dies bedeutet die Erzeugung hoher Reaktionsmomente am Sekundärschaufelrad.

Eine andere theoretisch ebenfalls denkbare Möglichkeit zur Abbremsung entsprechend der zweiten Grundvariante besteht darin, die Drehrichtung des Primärschaufelrades ebenfalls umzukehren, beispielsweise durch Einlegung des Rückwärtsganges. In diesem Fall ist jedoch eine Unterbrechung des Kraftflusses von der Antriebsmaschine zum Primärschaufelrad erforderlich, beispielsweise durch eine Abkoppelung der Getriebeeingangswelle von der Antriebsmaschine.

Die einzelnen Möglichkeiten zur An- und Entkopplung des Primär- und Sekundärschaufelrades an die Getriebeeingangswelle sowie zur Feststellung der einzelnen Schaufelräder gegenüber den ruhenden Getriebeteilen können mittels Lastschaltelementen realisiert werden. Dies gilt analog für die Realisierung der Gangstufen im mechanischen Getriebeteil. Diese Lastschaltelemente sind vorzugsweise in Form von aneinander anpreßbaren Reibelementen, insbesondere in Lamellenbauart, ausgeführt. Andere Ausführungen sind denkbar. Die konkrete Auswahl der Art der Lastschaltelemente und deren Einsatz erfolgt jedoch in Abhängigkeit von den Erfordernissen des Einsatzfalles und liegt im Ermessen des Fachmannes.

Für die Ausführung des mechanischen Getriebeteiles sind eine Vielzahl von Varianten denkbar. Es besteht die Möglichkeit der Realisierung der einzelnen Gangstufen mittels Stirnradstufen und/oder Planetenradsätzen. Im einzelnen kommen beispielsweise sogenannte Ravigneaux-Planetenradsätze zum Einsatz. Vorzugsweise wird jedoch ein mechanischer Getriebeteil gewählt, welcher hinsichtlich seiner Baulänge relativ klein baut und trotzdem die Möglichkeit einer großen Drehzahl-Drehmomentenwandlung zuläßt. Eine bevorzugte Ausführung umfaßt wenigstens drei Planetenradsätze - einen ersten, einen zweiten und einen dritten Planetenradsatz. Die einzelnen Planetenradsätze umfassen jeweils wenigstens ein Sonnenrad, ein Hohlrad, Planetenräder und einen Steg. Die Planetenradsätze sind miteinander gekoppelt. Jedem Planetenradsatz ist wenigstens ein Kupplungs- und/oder ein Bremselement zugeordnet. Die Betätigung der einzelnen Lastschaltelemente erfolgt in Abhängigkeit der aktuellen Fahrbedingungen und des Fahrerwunsches und wird vorzugsweise über eine Steuereinrichtung, beispielsweise die Fahrsteuerung gesteuert.

Der Betriebszustand "Bremsen" kann auch in wenigstens zwei Teilbetriebszustände unterteilt werden, insbesondere wenn entsprechend der geschalteten Gangstufen beim Umschaltvorgang eine Vielzahl von Lastschaltelementen in Eingriff oder außer Eingriff gebracht werden sollen. Dabei ist es vorzugsweise vorgesehen, einen Teil der Lastschaltelemente betätigt zu lassen.

Die erfindungsgemäße Lösung bietet den Vorteil, daß mehrere Betriebszustände mit einem Getriebekonzept realisiert werden können, welches lediglich einen hydraulischen Getriebeteil zur Leistungsübertragung aufweist. Durch die Zuordnung der Funktionen "Kuppeln" und "Bremsen" zu einem hydrodynamischen Bauelement wird Bauraum gespart. Desweiteren reiht sich dieses Konzept in den vorherrschenden Entwicklungstrend, welcher einen immer kleineren hydrodynamischen Anteil während des Betriebszustandes Fahren anstrebt, ein und dient damit der Reduzierung von Kraftstoff. Ein wesentlicher Vorteil besteht des weiteren darin, daß mit einem Getriebe bzw. einer Getriebekonfiguration mit sehr geringer Variantenzahl eine optimale Anpassung an unterschiedliche Motoren und Fahrzeuge hauptsächlich über eine Füllungsregelung des hydrodynamischen Getriebeelementes realisiert werden kann, d. h. das Getriebe kann universell über einen großen Leistungsbereich eingesetzt werden. Auch ist es möglich die Dämpfung von Schwingungen zu vereinfachen. Beim ständigen Anfahren und Bremsen, d. h. im Stop- and Go-Verkehr sind deutliche Reduzierungen in der Geräuschemission der Antriebsmaschine vorhanden.

Durch Steuerung der Füllung kann das Drehzahlverhalten einer jeden Antriebsmaschine, insbesondere einer jeden Verbrennungskraftmaschine, beim Anfahren optimal hinsichtlich Geräusch und Abgas beeinflußt werden. Insbesondere im Betriebszustand Bremsen weist die Funktionszuordnung erhebliche Vorteile gegenüber den konventionellen Lösungen auf, welche im wesentlichen einen separaten Retarder hinter dem Getriebe vorsehen oder aber das Bremsmoment mit dem hydrodynamischen Wandler erzeugen. Mit der erfindungsgemäßen Lösung sind ausreichende konstante Bremsmomente bis zu kleinen Geschwindigkeiten hin möglich. Während des gesamten Betriebszustandes Bremsen sind keine Schaltungen erforderlich. Die Geräuschentwicklung im Betriebszustand Bremsen ist dadurch sehr gering. Bei Anpassungs- und Stopbremsungen bleibt der Motor ständig abgekoppelt und läuft im Leerlauf, erst bei Erreichen einer kritischen Öltemperatur wird der Motor zwecks besserer Wasserversorgung etwas hochgezogen, jedoch wird dies nur bei längeren Bergabfahrten erforderlich sein.
Schnelle Reaktionszeiten beim Funktionswechsel werden vorzugsweise durch eine Speicherfüllung realisiert. Das hydrodynamische Bauelement benötigt eine geringere Ölfüllung als ein hydrodynamischer Wandler.

Während des Betriebszustandes Fahren ergeben sich keine Retarderverluste im Fahrbetrieb, da beide Schaufelräder - Primärschaufelrad und Sekundärschaufelrad vorzugsweise gemeinsam rotieren und der Retarder entleert ist.

Die erfindungsgemäß gestaltete Getriebebaueinheit zeichnet sich durch eine universelle Einsetzbarkeit, einen geringen Kraftstoffverbrauch, eine hohe Umweltverträglichkeit, geringe Herstellungskosten und eine hohe Lebensdauer aus. Die möglichen Fahr- und Bremsmomente sind entsprechend der Auslegung des hydrodynamischen Bauelementes festgelegt. Die Kopplung mit den nachfolgenden mechanischen Getriebestufen ermöglicht eine hohe Spreizung und erlaubt den Einsatz in Stadt- und Überlandfahrzeugen. Das Getriebe liegt des weiteren innerhalb der Getriebekontur konventioneller Getriebevarianten.

Der Anteil des hydraulischen Getriebeelementes an der zu übertragenden Leistung ist gegenüber konventionellen Lösungen verringert. Das hydrodynamische Getriebeelement mit den beiden Funktionen "Kuppeln" und "Bremsen" bietet die Möglichkeit, die Anfahrvorgang so zu gestalten, daß eine optimale Funktion des Motors beim Hochlauf und im hydrodynamischen Bereich stattfindet. Bei den heute üblichen Wandlergetrieben wird der Motorhochlauf durch die Wandlerwiderstände die von der Geometrie der Beschaufelung und vom Profildurchmesser des Wandlers abhängig sind, bestimmt. In der Regel erfolgt der Gleichgewichtszustand erst bei unnötig hohen Drehzahlen, was mit erhöhtem Kraftstoffverbrauch, Emissionen und höheren Motorgeräuschen verbunden ist. Beide sind heute jedoch wichtige Argumente bei der Entscheidung für ein Getriebe. Das bedeutet im einzelnen, daß das Getriebe im unteren Drehzahlbereich einen geringen Widerstand bildet, damit der Motor möglichst rasch aus diesem ungünstigen Bereich, d. h. der Erzeugung kleiner Momente und Rußbildung herauskommt. Die Regelung der Motordrehzahl erfolgt auf einem gewünschten Drehzahlniveau während der folgenden Beschleunigung des Fahrzeuges durch Füllungsteuerung der Kupplung. Durch die Wahl der geeigneten Übertragungsfähigkeit der Kupplung wird die Antriebsmaschine nahezu schlupffrei an die mechanische Übersetzung angekoppelt. Bei der Fahrt in den mechanischen Gängen läuft das hydrodynamische Getriebeelement im entleerten Zustand vorzugsweise gekoppelt um, das heißt es sind keinerlei Ventilationsverluste vorhanden.

Durch die Verwendung lediglich eines einzigen hydrodynamischen Getriebeelementes im Gesamtgetriebe können die Anzahl der möglichen Getriebevarianten gesenkt werden, da eine Anpassung an die verschiedenen Betriebszustände bereits durch eine Füllungsgradänderung erfolgen kann.

Im einzelnen ist dieses Konzept vor allem für Mehrganggetriebe, insbesondere bei Fünf- als auch Sechsganggetrieben anwendbar.

Mit der Zuordnung der Funktionen "Kuppeln" und "Bremsen" zu einem hydrodynamischen Getriebeelement können nachfolgend genannte Eigenschaften erzielt werden. Die Anpassung der erforderlichen Momente beim Fahren und Bremsen kann durch Füllungsregelung erfolgen. Diese ermöglicht einen weiten Stellbereich der Momente von null bis zu einem Maximalmoment, ein gutes dynamisches Verhalten durch einen kleinvolumigen Strömungskreislauf und keine Einbuße bei Wiederholvorgängen durch vorrangiges Entleeren des hydrodynamischen Getriebeelementes in einen Speicher.

Die gute Umweltverträglichkeit wird durch geringere Geräusche beim Anfahren durch niedrige Motordrehzahl, geringere Geräusche durch Abkoppeln des Motors beim Bremsen, da der Motor mit Leerlauf bei allen Anpassungs- und Haltebremsungen umläuft, eine geringere Ölwechselmenge sowie längere Ölwechselintervalle durch kompletten Tausch der Ölmenge beim Ölwechsel und längere Ölwechselintervalle durch geringere Temperaturbelastung wegen großer umlaufender Ölmengen beim Bremsen und Anfahren realisiert. Desweiteren kann aufgrund der Auslegung des hydrodynamischen Getriebeelementes ein wesentlich größerer Bereich zur verschleißfreien Abbremsung realisiert werden.

Während des Anfahrens besteht die Aufgabe, den Motor nach Erreichen seines vollen Motormomentes an das Getriebe anzukoppeln. Auf dem Weg zum Kupplungspunkt sollen die Getriebemomente möglichst niedrig sein, damit dieser für den Motor ungünstige Bereich möglichst schnell durchfahren werden kann. Das Anfahren gliedert sich somit in die beiden Bereiche:
1. Hochlauf des Motors zum Kupplungspunkt
2. Regelverhalten nach Erreichen des Kupplungspunktes

Um diese Eigenschaften zu erreichen gibt es mehrere Möglichkeiten:
1. Regelung einer konstanten Füllung unabhängig von der Motordrehzahl
2. Drehzahlabhängige Regelung der Füllung
3. Einschieben einer gezielten Menge durch gesteuerte Einschaltzeit des Speichers

Das Regelverhalten nach Erreichen des Kupplungspunktes zeichnet sich durch eine Drehzahlregelung des Motors aus.

Im erst genannten Fall richtet sich die Stärke der Füllung nach der gewünschten Übertragungsfähigkeit abgeleitet aus der Kennlinie der Antriebsmaschine. Durch eine entsprechende Vorgabe des Solldruckes besitzt das hydrodynamische Getriebeelement bei Leerlauf der Antriebsmaschine bereits die gewünschte Füllung, so daß beim Gasgeben der gewünschte Kupplungspunkt nahezu ohne Füllungsgradänderung erreicht wird. Das Primärschaufelrad muß dazu bei Erreichen der Leerlaufdrehzahl bereits angekoppelt sein.

Bei abgekoppelten Primärschaufelrad ergibt sich eine Vollfüllung des Arbeitsraumes, wobei die Möglichkeit besteht, daß sich die Füllung während des Hochlaufens auf den gewünschten Wert einstellt, indem das überschüssige Betriebsmittel ausgeschleudert würde.

Bei der drehzahlabhängigen Regelung der Füllung ist der Arbeitsraum des hydrodynamischen Getriebeelementes entleert. Erst bei entsprechender Vorgabe des Lastgebers und dem Erreichen einer bestimmten Drehzahl der Antriebsmaschine wird die gewünschte Füllung eingestellt. Die Primärschaufelradkupplung entsprechend einer Konfiguration zur Realisierung des Bremsvorganges entsprechend der ersten Grundvariante kann dazu betätigt oder freigegeben sein, wobei bei betätigter Primärschaufelradkupplung diese möglichst bald nach der Betätigung des Lastgebers oder nach dem Ende eines Bremssignales geschlossen werden sollte.

Des weiteren besteht die Möglichkeit, eine gezielte Menge an Betriebsmittel durch eine Steuerung der Einschaltzeit des im Betriebsmittelversorgungssystem integrierten Speichers des hydrodynamischen Getriebeelementes in den Arbeitsraum einzulassen. Dazu ist im Ausgangszustand der Arbeitsraum des hydrodynamischen Getriebeelementes entleert. Bei Erreichen einer bestimmten Antriebsmaschinendrehzahl und einer entsprechenden Vorgabe des Lastgebers wird eine motorspezifische Ölmenge durch den im Betriebsmittelversorgungssystem des hydrodynamischen Getriebeelementes integrierten Speicher in den Arbeitsraum eingeschoben. Die Primärschaufelradkupplung kann dabei betätigt oder freigegeben sein. Im freigegebenen Zustand sollte diese jedoch möglichst bald nach Betätigung des Lastgebers oder nach Beendigung eines Bremssignales betätigt werden. Bei allen Haltevorgängen ist jedoch bei gewünschtem gleichen Ausgangszustand darauf zu achten, daß vor der Freigabe der Primärschaufelradkupplung der Arbeitsraum des hydrodynamischen Getriebeelementes entleert werden kann.

Sobald der Kupplungspunkt erreicht ist, schaltet die Steuerung auf eine Drehzahlregelung der Antriebsmaschine um. Die Aktivierung des Speichers wird abgeschaltet. Sobald sich das Fahrzeug in Bewegung setzt und damit eine Drehzahlsteigerung des Sekundärschaufelrades erfolgt, nimmt aufgrund der Drehzahlregelung die Füllung des Arbeitsraumes des hydrodynamischen Getriebeelementes weiter zu und versucht den Motor auf der Kupplungsdrehzahl zu halten. Bei vollständig gefülltem Arbeitsraum ist die Anschlußdrehzahl der mechanischen Übersetzung dann annähernd erreicht. Durch das Schließen der Überbrückungskupplung zwischen Getriebeeingangswelle und Sekundärschaufelrad wird ohne eine nennenswerte Drehzahländerung der Antriebsmaschine diese mit der Abtriebsseite vollends synchronisiert und das Fahrzeug befindet sich in der ersten mechanischen Gangstufe.

Zur Dämpfung von Schwingungen während des Anfahvorganges ist ein Dämpfungselement vorgesehen. Durch die rein hydraulische Anfahrstufe genügt eine einstufige Federcharakteristik dessen, d.h. das Dämpfungselement umfaßt wenigstens ein Federelement. Dieses ist vorzugsweise zwischen der Antriebsseite und der Mitnahme der Außenlamellen der Überbrückungskupplung angeordnet. Andere Möglichkeiten sind ebenfalls denkbar.

Es besteht auch die Möglichkeit, ein hydrodynamisches Getriebeelement, umfassend wenigstens ein Primär- und ein Sekundärschaufelrad als vormontierte Baugruppe mit einem Gehäuse zu erstellen. Dabei werden den einzelnen Schaufelrädern, insbesondere dem Primärschaufelrad, die Mittel zum Ankoppeln an eine antreibende Welle und zum Festsetzen unmittelbar zugeordnet und letztere am Gehäuse gelagert.

Aufgrund des guten Wirkungsgrades des hydrodynamischen Bauelementes, welcher auf jeden Fall besser als der eines hydrodynamischen Wandlers ist, kann das hydrodynamische Bauelement in den unteren Gangstufen aktiv bleiben. Das verbessert das Fahrverhalten und die Schaltübergänge durch die hydraulische weiche Anbindung des Motors beachtlich. Der Einsatz der Überbrückungskupplung kann abhängig von der Beschleunigung des Fahrzeuges erfolgen oder aber in den oberen Geschwindigkeitsbereich gelegt werden, wo der rein mechanische Betrieb keinerlei Probleme mehr bereitet.

Bezüglich des Wechsels der verschiedenen Gangstufen gelten die gleichen Anforderungen wie ansonsten an Getriebe auch. Die Antriebsmaschine, insbesondere der Verbrennungsmotor muß durch die entsprechenden Schaltelemente möglichst direkt und ruckfrei auf die neue Anschlußdrehzahl gebracht werden. Hierzu wird mit einer leichten Überschneidung aus- bzw. eingeschaltet und der einzuschaltende Gang mit dem entsprechenden Druckhochlauf ausgestattet.

Beim Schaltvorgang über eine Gruppe synchronisiert dann die Gruppenkupplung die Verbrennungskraftmaschine auf die entsprechende Anschlußdrehzahl. Danach erfolgt zügig, ohne großen Druckaufbau, mit der bekannten Überschneidung der Wechsel der Gangstufen. Dabei entstehen keine nennenswerten Auswirkungen auf den Abtrieb, weil nur geringe, getriebeinteme Massen in ihrer Drehzahl angepaßt werden.

Das Getriebe weist des weiteren über den gesamten Bereich einen guten Wirkungsgrad auf und bezüglich Schaltkomfort und Fahrverhalten sind keinerlei Rückschritte gegenüber den derzeit bekannten Getrieben zu verzeichnen. Während des Betriebszustandes "Fahren" wird das hydrodynamische Kupplungselement mit maximaler Füllung betrieben, hat dabei sehr wenig Schlupf und damit einen ausgezeichneten Wirkungsgrad, der je nach Last und Drehzahl zwischen 90 und 99 % liegen kann. Diese Werte werden von keinem hydrodynamischen Wandler erreicht. Das hydrodynamische Bauelement, welches während des Anfahrvorganges als Kupplung arbeitet, kuppelt hart. Trotzdem bleibt es ein hydraulisches Übertragungselement mit all seinen Vorteilen, wie beispielsweise die Dämpfung von Schwingungen und die Minderung von Geräuschen. Bei allen darauffolgenden Schaltungen wird dann der Schlupf des hydrodynamischen Bauelementes vergrößert, das Kuppeln erfolgt weicher und erreicht Werte, welche mindestens dem Schlupf eines hydrodynamischen Wandlers entsprechen. Die Schaltung der einzelnen Gangstufen im ersten Betriebszustand kann zügig erfolgen, der zwangsweise entstehende Schlupf kann in das hydrodynamische Bauelement verlegt werden und sodann durch Steigerung der Füllung wieder verringert werden. Damit können komfortable Übergänge bei gleichzeitiger Verringerung der Belastung der Schaltelemente zur Realisierung der einzelnen Gangstufen erzeugt werden.

Auch bei plötzlich auftretenden Lastwechseln kann der Schlupf des hydrodynamischen Bauelementes ebenfalls kurzzeitig erhöht werden, so daß sich eine hydraulische weiche Anbindung ergibt, außerdem ist die Abstützung im Schubbetrieb sehr gering. Der gefürchtete Lastwechsetschlag dürfte dann kein Thema sein. Hinzu kommt, daß die Kennlinie des verwendeten elastischen Dämpfers bessere Eigenschaften bei Lastwechseln besitzt. Das hydrodynamische Bauelement wird dann im Betriebszustand "Fahren" überbrückt, wenn die Schaltung der einzelnen Gangstufen im ersten Betriebszustand keine Einbuße im Schaltkomfort mehr verursacht. Diese Funktion wird durch entsprechende Steuerung der Füll- und Entleervorgänge gewährleistet.

Des weiteren bietet die erfindungsgemäße Lösung der Aufgabe die Möglichkeit der Schaffung einer vormontierten hydrodynamischen Baugruppe entsprechend der Ansprüche 40 und 41.

Die erfindungsgemäße Lösung wird nachfolgend anhand von Figuren erläutert.
- Figur 1: verdeutlicht schematisch in vereinfachter Darstellung die Konfiguration einer bevorzugten Ausführung eines erfindungsgemäß gestalteten Getriebes zur Erzeugung des Bremsmomentes nach der ersten Grundvariante;
- Figur 2: verdeutlicht ein Schaltschema zur Betätigung der einzelnen Lastschaltelemente eines Getriebes entsprechend Figur 1;
- Figur 3a und 3b: verdeutlicht schematisch die Arbeitsweise des hydrodynamischen Getriebeelementes während des Anfahrvorganges im ersten Betriebszustand und während des zweiten Betriebszustandes;
- Figur 4: zeigt eine Anordnung eines Dämpfungsgliedes;
- Figur 5: verdeutlicht den Aufbau eines Dämpfungsgliedes;
- Figur 6: verdeutlicht schematisch in vereinfachter Darstellung die Konfiguration einer bevorzugten Ausführung eines erfindungsgemäß gestalteten Getriebes zur Erzeugung des Bremsmomentes nach der zweiten Grundvariante;
- Figur 7a und 7b: verdeutlicht schematisch in vereinfachter Darstellung eine weitere Konfiguration eines erfindungsgemäß gestalteten Getriebs zur Erzeugung des Bremsmomentes nach der ersten Grundvariante und das Schaltschema zur Betätigung der einzelnen Lastschaltelemente.

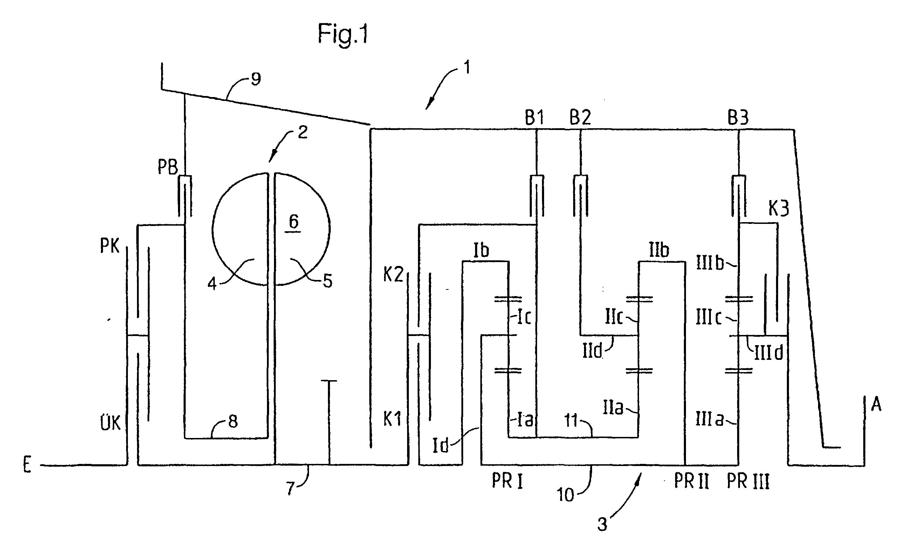

Die Figur 1 verdeutlicht schematisch anhand einer vereinfachten Darstellung eines Axialschnittes den Aufbau einer erfindungsgemäß gestalteten Getriebeeinheit 1 in einer bevorzugten Ausführung.
Die Getriebeeinheit 1 weist eine Getriebeeingangswelle E und eine Getriebeausgangswelle A auf. Die Getriebeeinheit 1 umfaßt des weiteren einen ersten hydraulischen Getriebeteil 2 und einen zweiten mechanischen Getriebeteil 3. Der erste hydraulische Getriebeteil 2 umfaßt ein hydrodynamisches Getriebeelement mit wenigstens zwei Schaufelrädern - einem ersten Schaufelrad und einem zweiten Schaufelrad. Das erste Schaufelrad wird als Primärschaufelrad 4 und das zweite Schaufelrad als Sekundärschaufelrad 5 bezeichnet. Das Primärschaufelrad 4 und das Sekundärschaufelrad 5 bilden miteinander wenigstens einen torusförmigen Arbeitsraum 6, welcher mit Betriebsmittel befüllbar ist. Zu diesem Zweck ist dem torusförmigen Arbeitsraum 6 eine, hier im einzelnen nicht dargestellte Betriebsmittelversorgungseinheit zugeordnet. Der hydraulische Getriebeteil ist beim Einsatz des erfindungsgemäß gestalteten Getriebes in einem Fahrzeug in den zwei unterschiedlichen Betriebszuständen - einem ersten Betriebszustand, welcher als "Fahren", und einem zweiten Betriebszustand, welcher als "Bremsen" bezeichnet wird, jeweils als hydrodynamische Kupplung und als hydrodynamischer Retarder betreibbar. Dazu werden den einzelnen Schaufelrädern - dem Primärschaufelrad 4 und dem Sekundärschaufelrad 5, jeweils unterschiedliche Funktionen zugewiesen. Während des ersten Betriebszustandes, insbesondere während des Anfahrvorganges, arbeitet das Primärschaufelrad 4 als sogenanntes Pumpenrad und das Sekundärschaufelrad 5 als Turbinenrad. Im zweiten Betriebszustand "Bremsen" wird dem Primärschaufelrad 4 die Funktion des Statorschaufelrades eines hydrodynamischen Retarders zugewiesen. Das Sekundärschaufelrad 5 übernimmt dann die Funktion des Rotorschaufelrades.

Zur Realisierung dieser Funktionen müssen entsprechende Mittel vorgesehen sein, welche eine Funktionszuordnung in der genannten Weise ermöglicht. Das Sekundärschaufelrad 5 ist über eine Verbindungswelle 7 ständig drehfest mit dem mechanischen Getriebeteil 3 verbunden. Die Verbindungswelle 7 ist über eine sogenannte Durchkupplung, welche auch als Überbrückungskupplung ÜK bezeichnet wird, mit der Getriebeeingangswelle E koppelbar. Über diese Kopplung ist damit auch das Sekundärschaufelrad 5 mit der Getriebeeingangswelle E verbindbar. Das Primärschaufelrad 4 ist mittels einer sogenannten Primärschaufelradkupplung PK mit der Getriebeeingangswelle E koppelbar. Das Primärschaufelrad 4 ist vorzugsweise drehfest auf einer Verbindungswelle 8 angeordnet, wobei die Verbindungswelle 8 mit der Getriebeeingangswelle E durch die Primärschaufelradkupplung PK verbindbar ist. Der Verbindungswelle 8 ist ein Bremselement, welches hier als Primärschaufelradbremse PB bezeichnet wird, zugeordnet. Diese Primärschaufelradbremse PB ist gestellfest an einem ruhenden Getriebeteil, vorzugsweise am hier angedeuteten Getriebegehäuse 9 befestigt.

Das Sekundärschaufelrad 5 ist über die Verbindungswelle 7 mit dem zweiten mechanischen Getriebeteil 3 koppelbar. Der zweite mechanische Getriebeteil 3 umfaßt im dargestellten Fall drei Planetenradsätze, einen ersten Planetenradsatz PRI, einen zweiten Planetenradsatz PRII und einen dritten Planetenradsatz PRIII. Die einzelnen Planetenradsätze umfassen jeweils wenigstens ein erstes Sonnenrad - für den ersten Planetenradsatz PRI mit Ia, für den zweiten Planetenradsatz PRII mit IIa und für den dritten Planetenradsatz PRIII mit IIIa bezeichnet, ein Hohlrad, Planetenräder und einen Steg. Die Hohlräder der einzelnen Planetenradsätze sind hier für den ersten Planetenradsatz PRI mit Ib, für den zweiten Planetenradsatz PRII mit IIb und für den dritten Planetenradsatz PRIII mit IIIb bezeichnet. Den Planetenrädern sind die Bezugsziffern für den ersten Planetenradsatz PR IIc, für den zweiten Planetehradsatz PRII llc und für den dritten Planetenradsatz PRIII IIIc zugeordnet. Die Stege der einzelnen Planetenradsätze sind mit Id, IId und IIId bezeichnet. Wenigstens ein erstes Getriebeelement des ersten Planetenradsatzes PRI, des zweiten Planetenradsatzes PRII und des dritten Planetenradsatzes PRIII sind miteinander über eine Verbindungswelle 10 verbunden. Vorzugsweise sind dazu diese Getriebeelemente drehfest auf der Verbindungswelle 10 angeordnet. Das erste Getriebeelement des ersten Planetenradsatzes wird dabei vom Steg Id, des zweiten Planetenradsatzes PRII vom Hohlrad IIb und des dritten Planetenradsatzes PRIII vom Sonnenrad IIIa gebildet. Ein weiteres zweites Getriebeelement des ersten und des zweiten Planetenradsatzes PRI beziehungsweise PRII sind ebenfalls miteinander gekoppelt. Die zweiten Getriebeelemente werden dabei im ersten Planetenradsatz PRI vom Sonnenrad Ia und im zweiten Planetenradsatz PRII vom Sonnenrad IIa gebildet. Dazu sind beide Sonnenräder - das Sonnenrad des ersten und des zweiten Planetenrades - vorzugsweise drehfest auf einer gemeinsamen Welle 11, welche als Hohlwelle ausgebildet sein kann, angeordnet. Die Verbindungswelle 7 zwischen dem hydraulischen Getriebeteil 2 und dem mechanischen Getriebeteil 3 ist über ein erstes Kupplungselement K1 mit dem ersten Planetenradsatz PRI koppelbar. Ein weiteres zweites Kupplungselement K2 ist der Verbindung, vorzugsweise der Verbindungswelle zwischen den beiden zweiten Getriebeelementen vom ersten Planetenradsatz PRI und zweiten Planetenradsatz PRII, welche jeweils von den Sonnenrädern Ia und IIa gebildet werden, wenigstens mittelbar zugeordnet.

Ein zweites Getriebeelement des dritten Planetenradsatzes PR III wird vom Steg IIId gebildet. Der Steg IIId ist dabei drehfest mit der Getriebeausgangswelle A verbindbar. Vorzugsweise ist der Steg IIId des dritten Planetenradsatzes PR III mit der Getriebeausgangswelle drehfest gekoppelt. Ein drittes Getriebeelement des dritten Planetenradsatzes PRIII wird vom Hohlrad IIIb gebildet. Das Hohlrad IIIb ist dabei über ein weiteres drittes Kupplungselement K3 drehfest mit dem Steg, und damit der Getriebeausgangswelle verbindbar.

Jedem Planetenradsatz PRI, PRII beziehungsweise PRIII ist ein Bremselement zugeordnet. Ein erstes Bremselement B1 dient dabei dem Feststellen der Verbindung zwischen den beiden Sonnenrädern Ia und IIa der beiden Planetenradsätze PRI und PRII. Ein zweites Bremselement B2 dient dem Festsetzen eines dritten Getriebeelementes des zweiten Planetenradsatzes PRII, welches vom Steg IId gebildet wird. Ein drittes Bremselement B3 ist dem dritten Getriebeelement des dritten Planetenradsatzes PRIII, welches vom Hohlrad IIIb gebildet wird, zugeordnet.

Die detaillierte konstruktive Ausführung für die oben beschriebene Anordnung liegt dabei im Ermessen des Fachmannes. Für die Realisierung einzelner Betriebszustände und Gangstufen kann die Zuordnung der einzelnen Kupplungs- und Bremselemente K beziehungsweise B zu den die einzelnen Getriebestufen realisierenden mechanischen Getriebebestandteilen entsprechend festgelegt werden. Auch die Gestaltung des mechanischen Getriebeteiles kann unterschiedlich ausgeführt sein. Im einzelnen sind beispielsweise Schaltstufen in Form von Stirnradstufen, Planetenradstufen und Kombinationen von beiden denkbar. Die einzelnen Bremselemente sind dabei vorzugsweise an ruhenden Bauteilen des Getriebes befestigt, vorzugsweise am Gehäuse beziehungsweise der Gehäusewand 9.

Für die Gestaltung der einzelnen Lastschaltelemente, der Überbrückungskupplung ÜK, der Primärschaufelradkupplung PK, der Primärschaufelradbremse PB, der einzelnen Kupplungselemente K und der einzelnen Bremselemente B sind verschiedene Varianten denkbar. Vorzugsweise in Reibscheibenbauweise, speziell in Lamellenbauart ausgeführt. Dem Fachmann stehen jedoch hier aus dem Stand der Technik ebenfalls eine Vielzahl von Möglichkeiten zur Verfügung.

Die Figur 1 verdeutlicht eine bevorzugte Ausführung eines mechanischen Getriebeteiles einer Kombination mit dem mit Funktionsänderung betriebenen hydrodynamischen Getriebeelement. Andere Ausführungen des mechanischen Getriebeteiles sind denkbar.

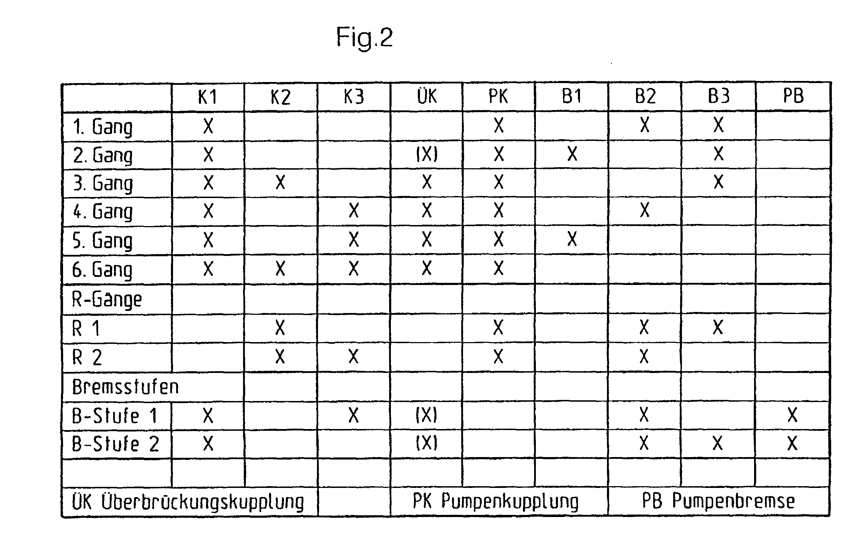

Die Figur 2 zeigt eine Übersicht über die mit dem in der Figur 1 beschriebenen Getriebe verwirklichten Betriebszustände und der einzelnen Gangstufen. Wie bereits ausgeführt handelt es sich bei dem in der Figur 1 beschriebenen Getriebeeinheit um eine bevorzugte Ausführungsform, anhand derer die Funktionsweise eines als hydrodynamische Kupplung oder als hydrodynamischer Retarder betreibbaren hydraulischen Getriebeteiles 2 dargestellt und erläutert werden soll. Im einzelnen werden die zwei Grundbetriebszustände Fahren und Bremsen unterschieden. Der Betriebszustand Fahren umfaßt dabei im dargestellten Beispiel die Gangstufen 1 bis 6 sowie zwei Rückwärtsgänge. Der Betriebszustand Bremsen umfaßt zwei Bremsstufen - eine erste Bremsstufe und eine zweite Bremsstufe.
Im ersten Gang des ersten Betriebszustandes, dem sogenannten Anfahrgang, ist die Primärschaufelradkupplung PK betätigt und verbindet damit die Getriebeeingangswelle E über die Verbindungswelle 8 mit dem Primärschaufelrad 4. Die Verbindung zwischen dem hydraulischen Getriebeteil 2 und dem mechanischen Getriebeteil 3 wird über das erste Kupplungselement K1 realisiert. Desweiteren sind das zweite und dritte Bremselement B2 und B3 betätigt. Die hydraulische Baueinheit 2, insbesondere der torusförmige Arbeitsraum 6 ist in diesem Zustand mit Betriebsmittel befüllt. Der Kraftfluß beziehungsweise die Leistungsübertragung erfordert dabei über die mit einer hier nicht dargestellten Antriebsmaschine wenigstens mittelbar koppelbare Getriebeeingangswelle E, die Primärschaufelradkupplung PK, das Primärschaufelrad 4, das Sekundärschaufelrad 5 über das erste Kupplungselement K1, den ersten Planetenradsatz PRI, insbesondere das Hohlrad Ib des ersten Planetenradsatzes auf den Steg IIId des dritten Planetenradsatzes und damit die Getriebeausgangswelle A, welche wenigstens mittelbar mit einer anzutreibenden Einrichtung, beispielsweise den Rädern eines Fahrzeuges in Triebverbindung bringbar ist.

Das hydraulische Getriebeteil 2 arbeitet während des Anfahrvorganges als hydrodynamische Kupplung. Eine Befüllung erfolgt während der einzelnen Gangstufen im Betriebszustand Fahren nur während des Anfahrvorganges. Im Übergang in die zweite Gangstufe wird der hydraulische Getriebeteil 2, insbesondere der torusförmige Arbeitsraum 6, entleert. Das erste Kupplungselement K1 sowie das dritte Bremselement B3 bleiben betätigt, desweiteren die Primärschaufelradkupplung PK. Das zweite Bremselement B2 wird gelöst und dafür das erste Bremselement B1 betätigt. Mit dieser Gangstufe kann die Überbrückungskupplung ÜK, welche die Getriebeeingangswelle E mit dem Sekundärschaufelrad 5 beziehungsweise der Verbindungswelle 7 verbindet, betätigt oder aber freigegeben sein. Dies hängt davon ab, in wie weit die Funktion des hydraulischen Getriebeelementes 2 als hydrodynamische Kupplung in die zweite Gangstufe hineinreicht. In diesem Fall ist der Arbeitsraum 6 des hydraulischen Getriebeteiles 2 auch während der zweiten Gangstufe noch befüllt. Erfolgt jedoch eine Durchkupplung zwischen der Getriebeeingangswelle E und dem mechanischen Getriebeteil 3 ist der torusförmige Arbeitsraum 6 des hydraulischen Getriebeteils 2 entleert. Im diesem Fall erfolgt der Kraftfluß von der Getriebeeingangswelle E über die Überbrückungskupplung ÜK, der Verbindungswelle 7, dem ersten Kupplungselement K1 zum Hohlrad Ib des ersten Planetenradsatzes PRI, auf den Steg Id des ersten Planetenradsatzes über die Verbindungswelle 10 auf den Steg IIId des dritten Planetenradsatzes PRIII und damit die Getriebeausgangswelle A.

In dieser zweiten Gangstufe wird aufgrund der drehfesten Verbindung zwischen Sekundärschaufelrad 5 und Verbindungswelle 7 dieses mit angetrieben. Dies hätte auch bei entleerten torusförmigen Arbeitsraum 6 Ventilationsverluste aufgrund der umgewälzten Luftmassen zwischen den beiden Schaufelrädem - dem Sekundärschaufelrad 5 und dem Primärschaufelrad 4 - zur Folge. Deshalb ist vorzugsweise während der gesamten Fahrstufen zusätzlich die Primärschaufelradkupplung PK betätigt. Diese ermöglicht, daß das Primärschaufelrad 4 gemeinsam mit dem Sekundärschaufelrad 5 mit gleicher Geschwindigkeit beziehungsweise Drehzahl umläuft. Dadurch werden Ventilationsverluste der Leistungsübertragung aufgrund umgewälzter und abgebremster Luftmassen zwischen beiden Schaufelrädern vermieden, und es sind keine zusätzlichen aufwendigen Einrichtungen, wie sie im Stand der Technik beispielsweise bei Retardern zur Vermeidung der Leistungsverluste erforderlich sind, von Nöten.

In der dritten Fahrstufe sind neben der Überbrückungskupplung ÜK und der Primärschaufelradkupplung PK das erste Kupplungselement K1, das zweite Kupplungselement K2 sowie das dritte Bremselement B3 betätigt. Alle anderen Lastschaltelemente befinden sich außer Eingriff. Der Kraftfluß erfolgt somit über die Getriebeeingangswelle E, die Überbrückungskupplung ÜK, die Verbindungswelle 7 über das erste Kupplungselement K1 zum ersten Planetenradsatz PRI, insbesondere zum Hohlrad Ib des ersten Planetenradsatzes PRI. Ein weiterer Leistungsanteil wird über das zweite Kupplungselement K2 auf das Sonnenrad Ia des ersten Planetenradsatzes PRI übertragen. Die wiederum am Steg Id des ersten Planetenradsätze PRI zusammengeführten Leistungsanteile werden über den Steg IIId des dritten Planetenradsatzes PRIII auf die Getriebeausgangswelle A übertragen.

In der vierten Gangstufe sind das erste Kupplungselement K1, das dritte Kupplungselement K3, die Überbrückungskupplung ÜK, die Primärschaufelradkupplung PK sowie das zweite Bremselement B2 betätigt. Alle anderen Lastschaltelemente sind außer Eingriff. Mittels des zweiten Bremselementes B2 wird der Steg IId des zweiten Planetenradsatzes PRII festgestellt. Das Hohlrad IIId des dritten Planetenradsatzes PRIII ist mit dem Steg des dritten Planetenradsatzes IIId drehfest verbunden. Die Leistungsübertragung erfolgt damit von der Getriebeeingangswelle E über die Überbrückungskupplung ÜK, die Verbindungswelle 7, das erste Kupplungselement K1 zum Hohlrad Ib des ersten Planetenradsatzes PRI, über den zweiten Planetenradsatz PRII, die Verbindungswelle 10 zu den Planetenrädern IIIc des dritten Planetenradsatzes PRIII, welche den mit dem Hohlrad IIIb gekoppelten Steg IIId des dritten Planetenradsatzes PRIII zur Getriebeausgangswelle A antreiben.

In der fünften Gangstufe werden lediglich das zweite Bremselement B2 gelöst und das erste Bremselement B1 betätigt. Dies bedeutet, daß die Verbindung zwischen dem ersten Planetenradsatz PRI und dem zweiten Planetenradsatz PRII, insbesondere die Verbindungswelle 11 festgestellt ist. Die Sonnenräder Ia und IIa der beiden Planetenradsätze PRI und PRII stehen somit still. Die Kraftübertragung selbst erfolgt wieder über die Eingangswelle E, die Überbrückungskupplung ÜK, die Verbindungswelle 7, das erste Kupplungselement K1, das Hohlrad Ib des ersten Planetenradsatzes PRI und von da über den Steg Id des ersten Planetenradsatzes PRI auf den Stege IIId des dritten Planetenradsatzes PRIII und damit der Getriebeausgangswelle A.

Die sechste Gangstufe unterscheidet sich von der fünften Gangstufe dadurch, daß alle drei Kupplungselemente K1, K2 sowie K3 betätigt, während alle Bremselemente gelöst sind.

Eine Drehrichtungsumkehr in den Rückwärtsgangstufen des ersten Betriebszustandes wird ebenfalls über bestimmte Kombinationen der Betätigung der einzelnen Lastschaltelemente, das heißt der Kupplungs- und Bremselemente realisiert. Dazu sind im wesentlichen in einem ersten Rückwärtsgang die Primärschaufelradkupplung PK, das zweite Bremselement B2, das zweite Kupplungselement K2 und das dritte Bremselement B3 betätigt. In einer zweiten Rückwärtsgangstufe sind das dritte Bremselement B3 gelöst und das dritte Kupplungselement betätigt. Das Freigeben und die Betätigung der einzelnen Kupplungs- und Bremselemente zur Realisierung der Rückwärtsgangstufen ermöglicht eine Drehrichtungsumkehr der Getriebeausgangswelle A.

Vorzugsweise bleiben hier entsprechend der einzelnen eingelegten Gangstufen die auch als Gruppenkupplung und Gruppenbremse bezeichneten Lastschaltelemente K3 und B3 jeweils betätigt und es werden die anderen Brems- und Kupplungselemente freigegeben oder in Eingriff gebracht. Dadurch wird der Betriebszustand Bremsen in wenigstens 2 Teilbereiche unterteilt.

Im zweiten Betriebszustand "Bremsen" wird der hydraulische, insbesondere hydrodynamische Getriebeteil 2 als Bremse betrieben. Die Funktion des Statorschaufelrades übernimmt dabei das Primärschaufelrad 4. Dieses wird mittels der Primärschaufelradbremse PB festgehalten. Mit dem in der Figur 1 dargestellten Getriebe lassen sich durch Einlegen der einzelnen Rückwärtsgangstufen im mechanischen Getriebeteil 3 im wesentlichen zwei Bremsstufen realisieren. In beiden Bremsstufen ist dazu die ÜK gelöst. Diese kann jedoch unter der Voraussetzung, daß die Antriebsmaschine vom Getriebe entkoppelt wird, betätigt bleiben.

Zur Kopplung der Verbindungswelle 7 mit dem zweiten Getriebeteil 3 ist das erste Kupplungselement K1 betätigt. Desweiteren ist in einer ersten Bremsstufe das dritte Kupplungselement K3 geschlossen, das heißt daß Hohlrad IIIb des dritten Planetenradsatzes PRIII ist drehfest mit dem Steg IIId des dritten Planetenradsatzes PRIII und damit der Getriebeausgangswelle A gekoppelt. In einer zweiten Bremsstufe ist das dritte Kupplungselement K3 gelöst und das dritte Bremselement B3 betätigt. Das zweite Bremselement B2 ist ebenfalls in beiden Bremsstufen geschlossen, das heißt der Steg IId des zweiten Planetenradsatzes PRII steht still.
Das Sekundärschaufelrad 5 wird in diesem Betriebszustand aufgrund des Schiebebetriebes von der Getriebeausgangswelle A über die einzelnen geschalteten Getriebeelemente des mechanischen Getriebeteiles angetrieben. Es übernimmt damit die Funktion des Rotorschaufeirades eines hydrodynamischen Retarders. Der Arbeitskreislauf im tarusförmigen Arbeitsraum 6 weist einen entgegengesetzte Strömungsrichtung gegenüber der im ersten Betriebszustand des hydraulischen Getriebeteiles beim Anfahren eingestellten Strömungsrichtung auf.

Im ersten Betriebszustand - "Fahren" - , insbesondere während des Anfahrvorganges arbeitet das hydraulische Getriebeelement 2 spießend. Bei Realisierung der Bremsstufen über die Rückwärtsgangstufen ist im zweiten Betriebszustand - "Bremsen" - die Betriebsweise aufgrund der Beschaufelung der Schaufelräder und geänderter Drehrichtung des Sekundärschaufelrades 5 ebenfalls spießend.

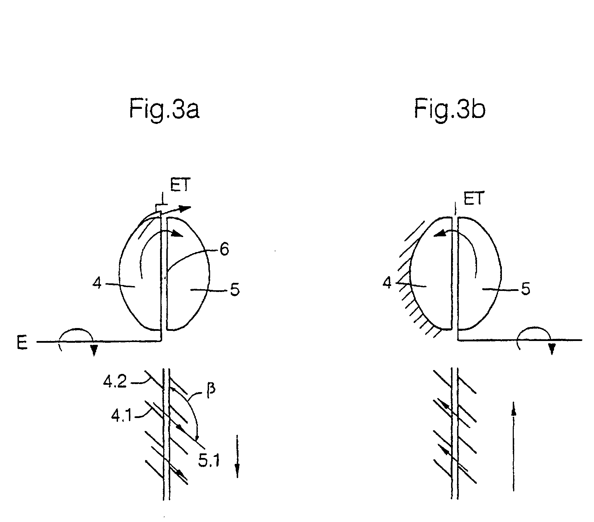

In den Figuren 3a und 3b sind jeweils in einem Zylinderschnitt durch das hydraulische Getriebeteil 2, insbesondere die beiden Schaufelräder - das Primärschaufelrad 4 und das Sekundärschaufelrad 5 - diese Arbeitsweisen vereinfacht schematisch verdeutlicht. Für gleiche Elemente sind gleiche Bezugszeichen verwendet.

Die Figur 3a verdeutlicht dabei die Arbeitsweise des hydrodynamischen Getriebeelementes während des Anfahrvorganges. Daraus wird ersichtlich, daß das Betriebsmittel vom Zwischenraum zweier benachbarter Schaufeln 4.1 und 4.2 des von der Getriebeeingangswelle angetriebenen Primärschaufelrades 4 aufgrund von dessen Rotation an den Schaufelrückseiten der Schaufeln, hier zur Verdeutlichung 5.1 und 5.2 des Sekundärschaufelrades 5, umgelenkt wird, d.h. ein geschlossener Betriebsmittelkreislauf zwischen Primär- und Sekundärschaufelrad ausgebildet und dadurch Drehmoment übertragen wird. Diese Arbeitsweise des Primärschaufelrades gegenüber dem Sekundärschaufelrad wird als "spießend" bezeichnet.

Auch im Betriebszustand Bremsen ist das hydrodynamische Getriebeelement mit Betriebsmittel befüllt. Aufgrund der schrägen Beschaufelung bildet sich dann ein geschlossener Kreislauf von Betriebsmittel zwischen dem in diesem Betriebszustand als Rotorschaufelrad fungierenden Sekundärschaufelrad und dem als Statorschaufelrad fungierenden Primärschaufelrad aus. Das angetriebene Sekundärschaufelrad verwandelt die eingeleitete mechanische Energie bei gefülltem Kreislauf in Strömungsenergie, die am stehenden Primärschaufelrad in Wärmeenergie umgesetzt wird. Das Sekundärschaufelrad arbeitet gegenläufig bezogen auf den Anfahrvorgang.

In der Figur 3a ist die Arbeitsweise des hydraulischen Getriebeelementes 2 als Kupplung während des Anfahrvorganges und eventuell während eines ersten Teiles einer weiteren Gangstufe im ersten Betriebszustand "Fahren" dargestellt. In diesem Fall wird das Primärschaufelrad 4 von der Getriebeeingangswelle E angetrieben. Die Drehrichtung bestimmt sich dabei durch die mit der Getriebeeingangswelle entweder direkt gekoppelte Abtriebswelle einer Arbeitsmaschine oder aber durch vorgeschaltete Kraftübertragungselemente. Bei Rotation des Primärschaufelrades 4 gegenüber dem Sekundärschaufelrad 5 steht die Beschaufelung derart zueinander, daß das hydraulische Getriebeteil spießend arbeitet.

In der Figur 3b ist das hydraulische Getriebeteil 2 im Betriebszustand Bremsen bei Drehrichtungsumkehr des Sekundärschaufelrades dargestellt. In diesem Betriebszustand ist das Primärschaufelrad 4 gegenüber dem Gehäuse der Kupplung ortsfest und gestellfest und das Sekundärschaufelrad 5 wird über die Rückwärtsgangschaltstufen im mechanischen Getriebeteil von der Getriebeausgangswelle A angetrieben. Aufgrund des Austausches der Antriebsseiten zwischen den Betriebszuständen Fahren und Bremsen wird ein Arbeitskreislauf im torusförmigen Arbeitsraum 6 erzeugt, welcher im Bremsbetrieb entgegen dem im Kuppelbetrieb gerichtet ist. Die Betriebsweise beider Schaufelräder ist ebenfalls spießend.

Die abgewickelte Darstellung der Beschaufelung der beiden Schaufelräder in den Figuren 3a und 3b verdeutlicht die Neigung der einzelnen Beschaufelungen gegenüber einer zwischen Primär- und Sekundärschaufelrad in Einbaulage bildbaren Trennebene E_{T}.

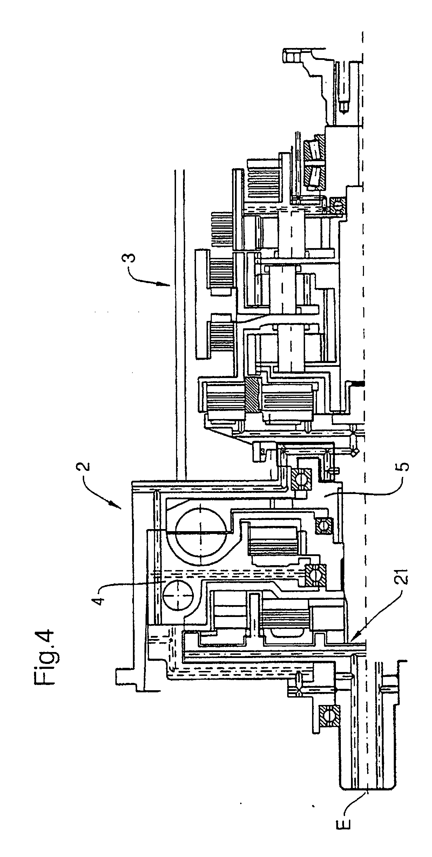

Figur 4 verdeutlicht anhand eines Ausschnittes aus einer Getriebedarstellung die Anordnung eines dem hydrodynamischen Bauelement vorgeschalteten Dämpfungselementes 21. Dieses ist vorzugsweise zwischen der Getriebeeingangsseite und der Mitnahme der Außenlamellen der Überbrückungskupplung ÜK angeordnet.

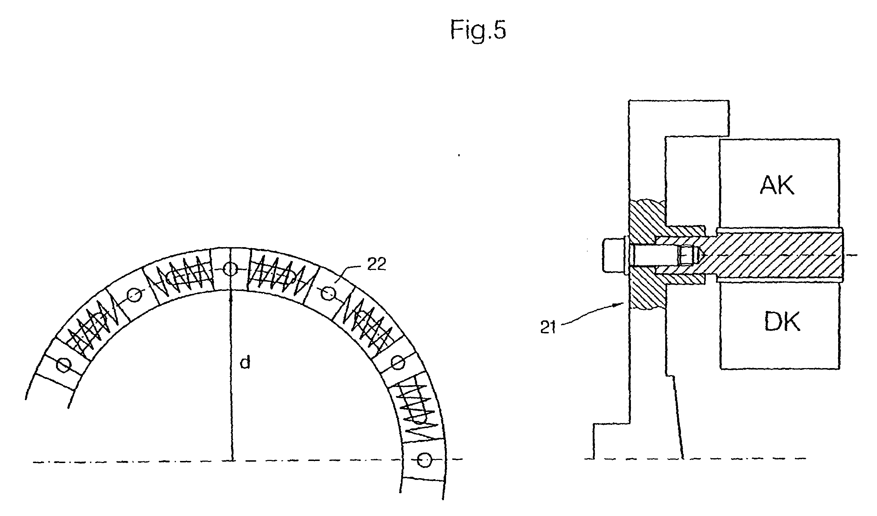

In Figur 5 ist der Aufbau im einzelnen dargestellt. Das Dämpfungselement 21 ist scheibenförmig ausgebildet und weist eine Vielzahl von auf einem bestimmten Durchmesser d in Umfangsrichtung anordenbaren Drehmomentstützen 22 und dazwischen angeordneten Energiespeichereinheiten in Form von Federelementen 23 auf.

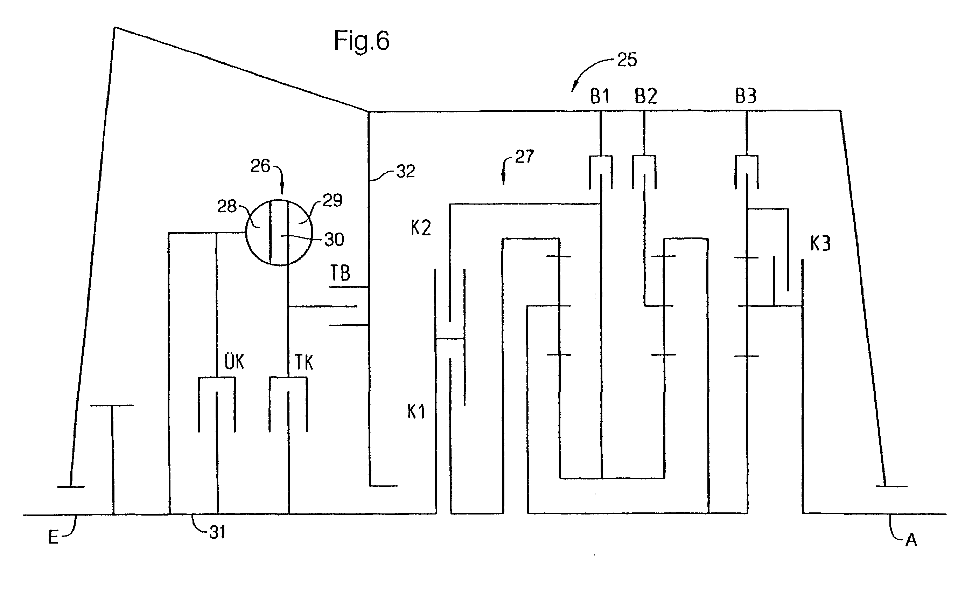

Die Figur 6 verdeutlicht schematisch anhand einer vereinfachten Darstellung eines Axialschnittes den Aufbau einer erfindungsgemäß gestalteten Getriebeeinheit 25 zur Erzeugung des Bremsmomentes nach der zweiten Grundvariante in einer bevorzugten Ausführung.
Die Getriebeeinheit 25 weist eine Getriebeeingangswelle E, eine Getriebeausgangswelle A, einen ersten hydraulischen Getriebeteil 26 und einen zweiten mechanischen Getriebeteil 27 auf. Der erste hydraulische Getriebeteil 26 umfaßt ein hydrodynamisches Getriebeelement mit wenigstens zwei Schaufelrädern - einem Primärschaufelrad 28 und einem Sekundärschaufelrad 29. Das Primärschaufelrad 28 und das Sekundärschaufelrad 29 bilden miteinander wenigstens einen torusförmigen Arbeitsraum 30, welcher mit Betriebsmittel befüllbar ist. Zu diesem Zweck ist dem torusförmigen Arbeitsraum 30 eine, hier im einzelnen nicht dargestellte Betriebsmittelversorgungseinheit zugeordnet. Der hydraulische Getriebeteil ist beim Einsatz des erfindungsgemäß gestalteten Getriebes in einem Fahrzeug in den zwei unterschiedlichen Betriebszuständen - einem ersten Betriebszustand, welcher als "Fahren" und einem zweiten Betriebszustand, welcher als "Bremsen" bezeichnet wird, jeweils als hydrodynamische Kupplung und als hydrodynamischer Retarder betreibbar. Dazu werden den einzelnen Schaufelrädern 28 und 29 jeweils unterschiedliche Funktionen zugewiesen. Während des ersten Betriebszustandes, insbesondere während des Anfahrvorganges, arbeitet das Primärschaufelrad 28 als sogenanntes Pumpenrad und das Sekundärschaufelrad 29 als Turbinenrad. Im zweiten Betriebszustand "Bremsen" wird dem Sekundärschaufelrad 29 die Funktion des Statorschaufelrades eines hydrodynamischen Retarders zugewiesen. Das Primärschaufelrad 28 übernimmt dann die Funktion des Rotorschaufelrades. Zur Realisierung dieser Funktionen müssen entsprechende Mittel vorgesehen sein, welche eine Funktionszuordnung in der genannten Weise ermöglicht. Das Primärschaufelrad 28 ist ständig drehfest mit der Getriebeeingangswelle E verbunden. Der zweite mechanische Getriebeteil 27 ist über eine sogenannte Durchkupplung, welche auch als Überbrückungskupplung ÜK bezeichnet wird, mit der Getriebeeingangswelle E koppelbar. Über diese Kopplung ist auch das Sekundärschaufelrad 29 mit der Getriebeeingangswelle E verbindbar. Das Sekundärschaufelrad 29 ist des weiteren mittels einer sogenannten Sekundärschaufelradkupplung TK mit dem mechanischen Getriebeteil 27, insbesondere der Verbindungswelle 31 zwischen Überbrückungskupplung ÜK und mechanischen Getriebeteil 27 koppelbar. Dem Sekundärschaufelrad 29 ist ein Bremselement, welches hier als Sekundärschaufelradbremse TB bezeichnet wird, zugeordnet. Diese Sekundärschaufelradbremse TB ist gestellfest an einem ruhenden Getriebeteil, vorzugsweise am hier angedeuteten Getriebegehäuse 32 befestigt.

Der zweite mechanische Getriebeteil 27 umfaßt im dargestellten Fall analog zu der in Figur 1 dargestellten Getriebekonfiguration drei Planetenradsätze, einen ersten Planetenradsatz PRI, einen zweiten Planetenradsatz PRII und einen dritten Planetenradsatz PRIII. Bezüglich des Aufbaus und der Zuordnung der einzelnen Schaltelemente wird auf Ausführungen zum mechanischen Getriebeteil in Figur 1 verwiesen. Dies gilt analog auch für die Betätigung und das Lösen der einzelnen, den Getriebeelementen des mechanischen Getriebeteiles 27 zugeordneten Schaltelemente. Diesbezüglich kann ebenfalls auf die Ausführungen zur Konfiguration entsprechend Figur 1 verwiesen werden.

Die Funktionsweise des hydrodynamischen Getriebeelementes läßt sich wie folgt beschreiben:
Im ersten Betriebszustand, während des Anfahrvorganges ist der torusförmige Arbeitsraum 30 befüllt. Die Überbrückungskupplung ÜK ist gelöst. Die Sekundärschaufelradkupplung TK ist betätigt. Der Kraftfluß beziehungsweise die Leistungsübertragung erfolgt dabei über die mit einer hier nicht dargestellten Antriebsmaschine wenigstens mittelbar koppelbare Getriebeeingangswelle E, das Primärschaufelrad 28, das Sekundärschaufelrad 29 über die Verbindungswelle 31 zum zweiten mechanischen Getriebeteil 27 und damit zur Ausgangswelle A.

Das hydraulische Getriebeteil 2 arbeitet während des Anfahrvorganges als hydrodynamische Kupplung. Eine Befüllung erfolgt während der einzelnen Gangstufen im Betriebszustand Fahren im wesentlichen nur während des Anfahrvorganges. Im Übergang in die zweite Gangstufe wird der hydraulische Getriebeteil 26, insbesondere der torusförmige Arbeitsraum 30, entleert.
In den nachfolgenden Gangstufen ist die Überbrückungskupplung ÜK betätigt. Diese koppelt unter Umgehung des hydraulischen Getriebeteiles 26 die Getriebeeingangswelle E mit dem mechanischen Getriebeteil 27. Entsprechend der Betätigung und der Freigabe der einzelnen Lastschalteinrichtungen werden die Drehzahl- und das Drehmoment im mechanischen Getriebeteil 27 gewandelt.

Im Bremsbetrieb tauschen die Schaufelräder ihre Funktion. Das Sekundärschaufelrad 29 wird mittels der Sekundärschaufelradbremse TB gegenüber den ruhenden Getriebeteilen festgehalten und übernimmt somit die Funktion des Statorschaufelrades. Die Sekundärschaufelradkupplung TK ist gelöst. Die Überbrückungskupplung ÜK bleibt betätigt und das Primärschaufelrad 28 wird in gleicher Drehrichtung wie während des Anfahrvorganges von der Abtriebsseite, insbesondere der Getriebeausgangswelle A entsprechend der im mechanischen Getriebeteil geschalteten Stufen angetrieben. Die mechanischen Gangstufen bleiben eingelegt.

Bei schräg ausgeführter Beschaufelung der einzelnen Schaufelräder, sind die einzelnen Schaufeln derart in Richtung des Schaufelgrundes geneigt angeordnet, daß sowohl im Kuppelbetrieb während des ersten Betriebszustandes als auch im Bremsbetrieb, d.h. im zweiten Betriebszustand das hydraulische Getriebeteil 26 bei gleichbleibender Strömungsrichtung des Betriebsmittels im torusförmigen Arbeitsraum spießend arbeitet.

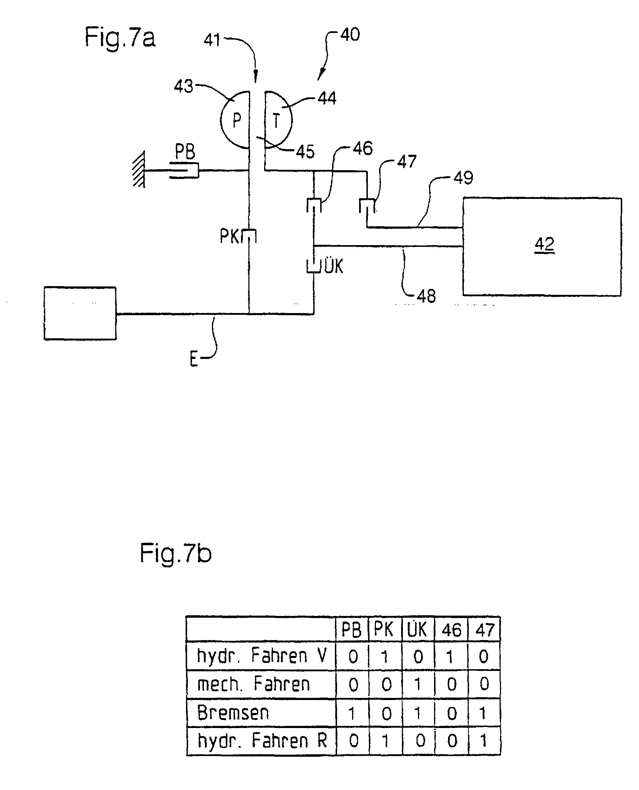

Die Figur 7a verdeutlicht schematisch in vereinfachter Darstellung eine weitere Figuration eines erfindungsgemäß gestalteten Getriebes zur Erzeugung des Bremsmomentes nach der ersten Grundvariante. Wesentliche Unterschiede gegenüber dem in der Figur 1 dargestellten Getriebeaufbau bestehen in der Anbindung der hydrodynamischen Kupplung bzw. des hydrodynamischen Retarders im Getriebe, weshalb lediglich auch nur diese Anbindungsmöglichkeit im einzelnen dargestellt ist.

Die Figur 7a verdeutlicht eine Getriebebaueinheit 40, umfassend einen ersten hydraulischen Getriebeteil 41 und einen zweiten mechanischen Getriebeteil 42. Die Getriebeeinheit 40 weist des weiteren eine Getriebeeingangswelle E und eine Getriebeausgangswelle A auf. Der erste hydraulische Getriebeteil 41 umfaßt ein hydrodynamisches Getriebeelement mit wenigstens zwei Schaufelrädern - einem ersten Schaufelrad und einem zweiten Schaufelrad. Das erste Schaufelrad wird als Primärschaufelrad 43, das zweite Schaufelrad als Sekundärschaufelrad 44 bezeichnet. Das Primärschaufelrad 43 und das Sekundärschaufelrad 44 bilden miteinander wenigstens einen torusförmigen Arbeitsraum 45. Dieser ist mit Betriebsmittel befüllbar. Zu diesem Zweck ist im torusförmigen Arbeitsraum 45 eine, hier im einzelnen nicht dargestellte, Betriebsmittelversorgungseinheit zugeordnet. Der hydraulische Getriebeteil 41 ist beim Einsatz des erfindungsgemäß gestalteten Getriebes in einem Fahrzeug in den zwei unterschiedlichen Betriebszuständen - einem ersten Betriebszustand, welcher als Fahren, und einem zweiten Betriebszustand, welcher als Bremsen bezeichnet wird, jeweils als hydrodynamische Kupplung und als hydrodynamischer Retarder betreibbar. Dazu werden den einzelnen Schaufelrädern - dem Primärschaufelrad 43 und dem Sekundärschaufelrad 44 - jeweils unterschiedliche Funktionen zugewiesen. Während des ersten Betriebszustandes, insbesondere während des Anfahrvorganges, arbeitet das Primärschaufelrad 43 als sogenanntes Pumpenrad und das Sekundärschaufelrad 44 als Turbinenrad. Im zweiten Betriebszustand Bremsen wird dem Primärschaufelrad 43 die Funktion des Statorschaufelrades eines hydrodynamischen Retarders zugewiesen. Das Sekundärschaufelrad 44 übernimmt dann die Funktion des Rotorschaufelrades. Zur Realisierung dieser Funktionen müssen entsprechende Mittel vorgesehen sein, welche eine Funktionszuordnung in der genannten Weise ermöglichen. Konstruktiv ist dazu das Sekundärschaufelrad 44 drehfest mit dem mechanischen Getriebeteil 42 koppelbar. Die Kopplung erfolgt dabei wahlweise über zwei Kupplungseinrichtungen, eine erste Kupplungseinrichtung 46 und eine zweite Kupplungseinrichtung 47. Die Kupplungseinrichtung 46 ermöglicht dabei die Verbindung zwischen Sekundärschaufelrad 44 und dem mechanischen Getriebeteil 42 über einen ersten Verbindungszweig 48, die Kupplungseinrichtung 47 ermöglicht die mechanische Kopplung zwischen dem Sekundärschaufelrad 44 und dem mechanischen Getriebeteil 42 über einen zweiten Verbindungszweig 49. Beide Verbindungszweige können jeweils mit dem gleichen Getriebeelement des mechanischen Getriebeteils 42 oder aber mit unterschiedlichen Getriebeelementen des mechanischen Getriebeteils 42 gekoppelt sein. Entscheidend dafür ist der Aufbau des mechanischen Getriebeteiles. Es ist lediglich sicherzustellen, daß durch die entsprechende Betätigung der Kupplungs- und Bremselemente im mechanischen Getriebeteil eine Drehrichtungsumkehr des Abtriebes zur Realisierung wenigstens eines Rückwärtsganges möglich ist.

Es sind erste Mittel vorgesehen, mittels welcher das Primärschaufelrad über einen Teilbereich des ersten Betriebszustandes an die Getriebeeingangswelle wenigstens mittelbar ankoppelbar ist. Das erste Mittel ist dabei eine im Primärschaufelrad zugeordnete Kupplungseinrichtung PK. Des weiteren sind zweite Mittel vorgesehen, mittels welchen die Getriebeeingangswelle E mit dem mechanischen Getriebeteil 42 unter Umgehung des Sekundärschaufelrades 44 koppelbar ist. Das zweite Mittel umfaßt dabei eine Kupplungseinrichtung in Form einer Überbrückungskupplung ÜK. Die Getriebeeinheit umfaßt des weiteren dritte Mittel, welche in einem zweiten Betriebszustand, welcher als Bremsen bezeichnet wird, das Primärschaufelrad 43 gegenüber den feststehenden Getriebeteilen festhält und abstützt. Dieses dritte Mittel ist als Primärschaufelradbremse PB ausgeführt.

Der mechanische Getriebeteil 42 kann unterschiedlich ausgeführt sein. Beispielsweise ist es denkbar, daß der mechanische Getriebeteil 42 analog dem in der Figur 1 beschriebenen ausgeführt ist. Dies ist jedoch nicht zwingend erforderlich, im einzelnen können verschiedene Kombinationen von Planetenradsätzen und Stirnradstufen eingesetzt werden.

Die konstruktive Ausführung entsprechend der Figur 7a ermöglicht es, das im mechanischen Fahrbereich beide Schaufelräder - das Primärschaufelrad 43 und das Sekundärschaufelrad 44 - von der Getriebeeingangswelle E bzw. dem mechanischen Getriebeteil 42 entkoppelt sind und somit keinerlei Leerlaufverluste in diesem Fahrbereich entstehen.

Figur 7b zeigt eine Übersicht über die mit dem in der Figur 7a beschriebenen Getriebe verwirklichten Betriebszustände. Diese Ausführung stellt eine bezüglich der Anbindung des hydraulischen Getriebeteils 41 bevorzugte Ausführung des Getriebes dar.

Das hydraulische Getriebeteil 41 arbeitet während des Anfahrvorganges als hydrodynamische Kupplung. Eine Befüllung erfolgt während der einzelnen Gangstufe im Betriebszustand Fahren vorzugsweise nur während des Anfahrvorganges. In diesem Fall ist die Primärschaufelradkupplung PK betätigt und die Überbrückungskupplung ÜK zwischen der Getriebeeingangswelle E und dem mechanischen Getriebeteil 42 ist gelöst. Das Sekundärschaufelrad ist in diesem Fall über das erste Kupplungselement 46 mit dem mechanischen Getriebeteil über den Verbindungszweig 48 gekoppelt.

Vorzugsweise ist die Beschaufelung der beiden Schaufelräder 43 und 44 gegenüber der Trennebene geneigt ausgeführt. Die Schaufelneigung ist dabei derart ausgerichtet, daß während des Anfahrvorganges das Primärschaufelrad 43 und das Sekundärschaufelrad 44 im spießenden Betrieb arbeiten, d. h. das Drehmoment vom Primärschaufeirad 43 zum Sekundärschaufelrad 44 übertragen wird.

Im mechanischen Fahrbereich ist das hydrodynamische Getriebeelement 41 geleert, die Überbrückungskupplung ÜK ist eingelegt und verbindet damit die Getriebeeingangswelle E mit dem mechanischen Getriebeteil 42. Das hydrodynamische Getriebeelement 41 wird in diesem Fall gänzlich umgangen, das bedeutet, daß beide Schaufelräder - das Primärschaufelrad 43 und das Sekundärschaufelrad 44 nicht mit umlaufen und daher keine Ventilationsverluste zu erwarten sind. Die einzelnen Gangstufen werden durch Betätigung und Lösung der einzelnen Lastschaltelemente im mechanischen Getriebeteil 42 realisiert.

Die Realisierung des Rückwärtsganges erfolgt durch entsprechende Betätigung der einzelnen Lastschaltelemente im mechanischen Getriebeteil und wird hauptsächlich über das hydraulische Fahrelement, d. h. das hydraulische Getriebelement 41 realisiert. Zu diesem Zweck ist dabei die Primärschaufelradkupplung PK geschaltet und das Sekundärschaufelrad ist über die zweite Kupplungseinrichtung 47 mit dem mechanischen Getriebeteil 42 über den Verbindungszweig 49 gekoppelt. Im einfachsten Fall wird über den Verbindungszweig 49 eine Verbindung zwischen dem Sekundärschaufelrad 44 und einer Umkehrschaltstufe im mechanischen Getriebeteil 42 realisiert. Eine entsprechende Betätigung der einzelnen Lastschaltelemente im mechanischen Getriebeteil 42, welche eine Umkehrung der Drehrichtung an der Getriebeausgangswelle ermöglichen, ist ebenfalls denkbar.

Für den Bremsvorgang bestehen auch hier zwei Möglichkeiten. Das Primärschaufelrad 43 übernimmt dabei jedoch auf jeden Fall die Funktion des Statorschaufelrades, in dem dieses gegenüber den ruhenden Getriebeteilen festgesetzt und abgestützt wird. Zur Realisierung der Funktionsänderung zwischen Leistungsübertragung und Bremsen entsprechend dieser Grundvariante sind im wesentlichen die nachfolgend genannten Möglichkeiten denkbar. Das Sekundärschaufelrad 44 wird entweder über den Abtrieb, d. h. von seiten der Getriebeausgangswelle A mit gleicher Drehrichtung bei möglicher Verbindung zwischen dem mechanischen Getriebeteil 42 und der Getriebeeingangswelle E oder aber von seiten des Abtriebes, d. h. der Getriebeausgangswelle A bei gelöster Verbindung zwischen Sekundärschaufelrad und Getriebeeingangswelle mit umgekehrter Drehrichtung bezogen auf seine Drehrichtung während des Anfahrvorganges angetrieben und übernimmt die Funktion des Rotorschaufelrades eines hydrodynamischen Retarders. In diesem Betriebszustand ist der hydraulische Getriebeteil 41 wenigstens zum Teil mit Betriebsmittel gefüllt. Dieses wird aufgrund der Sekundärschaufelradrotation im zwischen Primär- und Sekundärschautelrad gebildeten Arbeitsraum umgewälzt und an der feststehenden Beschaufelung des Primärschaufelrades 43 abgebremst. Zur Feststellung des Primärschaufelrades sind Mittel vorgesehen, die dieses in seiner Lage unveränderlich gegenüber den runden bzw. feststehenden Getriebeteilen festhalten und abstützen. In diesem Fall bedeutet dies die Betätigung der Primärschaufelradbremse PB. Zur Realisierung der erstgenannten Möglichkeit, welche im Schaltschema keinerlei Niederschlag findet, ist das hydrodynamische Getriebeelement 41 zur Erzeugung eines Bremsmomentes befüllt und das Sekundärschaufelrad 44 bleibt über die eingelegte Gangstufe mit der Getriebeausgangswelle A gekoppelt. Aufgrund des Schiebebetriebes von seiten des Abtriebes wird das Sekundärschaufelrad von diesem angetrieben, und zwar ohne Änderung der Drehrichtung bezogen auf die Drehrichtung im Anfahrvorgang. In diesem Fall kann dazu das Kupplungselement 46 betätigt sein.

Der erstgenannte Fall kann dabei jedoch nur bei schräger Beschaufelung der beiden Schaufelräder realisiert werden. Die Neigung der einzelnen Schaufeln gegenüber dem jeweiligen Schaufelgrund ist dabei derart gewählt, daß im ersten Betriebszustand, d. h. insbesondere während der Anfahrstufe, das Betriebsmittel vom Zwischenraum zweier benachbarter Schaufeln des von der Getriebeeingangswelle E angetriebenen Primärschaufelrades 43 aufgrund von dessen Rotation an den Schaufelrückseiten des Sekundärschaufelrades 44 umgelenkt wird, d. h. ein geschlossener Betriebsmittelkreislauf zwischen Primär- und Sekundärschaufelrad 43 bzw. 44 ausgebildet und dann durch Drehmoment übertragen wird. Diese Arbeitsweise des Primärschaufelrades gegenüber dem Sekundärschaufelrad wird als spießend bezeichnet. Auch im Betriebszustand Bremsen ist das hydrodynamische Getriebeelement 41 mit Betriebsmittel befüllt. Die eingelegte Gangstufe wird bei der erstgenannten Möglichkeit im mechanischen Getriebeteil 42 beibehalten. Das Primärschaufelrad 43 wird festgesetzt und das Sekundärschaufelrad 44 wird in gleichläufiger Richtung über das Fahrzeug, insbesondere die Getriebeausgangswelle A angetrieben. Die beiden Schaufelräder tauschen somit ihre Funktionen. Angetrieben wird jetzt das Sekundärschaufelrad, und zwar in der gleichen Drehrichtung wie das Primärschaufelrad während der Anfahrstufe. Das Primärschaufelrad 43 wird festgesetzt und übernimmt damit die Funktion eines Stators eines hydrodynamischen Retarders. Aufgrund der schräg ausgerichteten Beschaufelung kann jedoch nur ein Teil der durch Rotation des Sekundärschaufelrades 44 erzeugten Strömungsenergie des Betriebsmittels im torusförmigen Arbeitsraum 45 zur Erzeugung eines Bremsmomentes genutzt und damit in Wärme umgesetzt werden. Die Arbeitsweise des Sekundärschaufelrades 44 in diesem Betriebszustand kann als fliehend gegenüber dem als Statorschaufelrad fungierenden Primärschaufelrad 43 bezeichnet werden. Diese Art der Realisierung der Erzeugung eines Bremsmomentes durch Funktionsänderung der beiden Schaufelräder - Primär- und Sekundärschaufelrad - kann ohne zusätzlichen Aufwand aus der eingelegten Gangstufe heraus erfolgen. Da jedoch das erzeugte Bremsmoment wesentlich geringer ist als bei einer spießenden Arbeitsweise, wird versucht, bei schräg ausgeführter Beschaufelung eine spießende Arbeitsweise zwischen dem Primärschaufelrad 43 und dem Sekundärschaufelrad 44 zu ermöglichen. In diesem Fall wird die Drehrichtung des Sekundärschaufelrades 44 gegenüber der Drehrichtumg im Anfahrvorgang umgekehrt, wie im Schaltschema angegeben.
Die Umkehrung erfolgt vorzugsweise durch Einlegung eines Rückwärtsganges. Das angetriebene Sekundärschaufelrad 44 verwandelt dann die eingeleitete mechanische Energie bei gefülltem Kreislauf in Strömungsenergie, die am stehenden Primärschaufelrad 43 in Wärmeenergie umgesetzt wird. Diese bevorzugte Möglichkeit der Funktionsänderung des hydrodynamischen Getriebeelementes 41 bietet den Vorteil, daß durch eine Übersetzung des sekundärseitigen Schaufelrades 44 ins Schnelle und in Verbindung mit der von den Anforderungen an das hydrodynamische Bauelement beim Anfahrvorgang herrührenden großen Übertragungsfähigkeit der Kreislaufteile ein großer Geschwindigkeitsbereich entsteht, welcher mit einem Bremszustand abgedeckt werden kann, und zwar durch Änderung des Füllungsgrades. Zur Realisierung der Drehrichtungsumkehr ist dabei das Sekundärschaufelrad 44 ebenfalls über den zweiten Verbindungszweig 49 mit dem mechanischen Getriebeteil 42 gekoppelt. Je nach Anbindung der mechanischen Verbindungszweige 49 und 48 an den mechanischen Getriebeteil besteht die Möglichkeit, zusätzlich die Überbrückungskupplung ÜK betätigt zu lassen. Dies ist jedoch nur in den Fällen möglich, wenn der Verbindungszweig 48 im Bremsbetrieb trotzdem die gleiche Drehrichtung wie die Getriebeeingangswelle E aufweist. Im andern Fall ist auch die Überbrückungskupplung ÜK zu lösen.

Die Lösung der Überbrückungskupplung erfolgt jedoch immer, wenn beide Verbindungszweige mit dem gleichen Getriebeelement des mechanischen Getriebeteiles 42 verbunden sind, d.h. nur ein Eingang in den mechanischen Getriebeteil zur Verfügung steht. In diesem Fall ist, wie bereits ausgeführt, entweder durch eine Umkehrstufe oder die geeignete Kombination der Betätigung der im mechanischen Getriebeteil enthaltenen Kupplungs- und Bremselemente eine Drehrichtungsumkehr am Abtrieb bzw. dem Getriebeausgang, d.h. eine Rückwärtsfahrstufe zu realisieren. Im Bremsbetrieb erfolgt dann bei Einlegung des Rückwärtsganges aufgrund des Schiebebetriebes ein Antrieb der Verbindungszweige in entgegengesetzter Richtung bezogen auf die Vorwärtsfahrstufen.

Bezüglich der einzelnen Bremsstufen im Betriebszustand Bremsen kann auf die Ausführungen zu der in Figur 1 beschriebenen Getriebekonfiguration verwiesen werden. Auch hier besteht die Möglichkeit, entsprechend der Gestaltung des mechanischen Getriebeteiles 42, mehrere Bremsstufen zu erhalten.

## Patentansprüche

1. Getriebebaueinheit (1; 40) für Antriebseinheiten zur Realisierung wenigstens zweier Betriebszustände - einen ersten Betriebszustand zur Leistungsübertragung mit wenigstens zwei Gangschaltstufen und einen zweiten Betriebszustand zur Abbremsung;
1.1 mit einer Getriebeeingangswelle (E) und einer Getriebeausgangswelle (A);
1.2 mit einem ersten hydraulischen Getriebeteil (2; 41);
1.3 mit einem zweiten mechanischen Getriebeteil (3; 42);
1.4 die beiden Getriebeteile (2, 3; 41, 42) sind in Reihe angeordnet;
1.5 der hydraulische Getriebeteil (2; 41) umfaßt eine hydrodynamische Kupplung mit zwei Schaufelrädern - ein Primärschaufelrad (4; 43) und ein Sekundärschaufelrad (5; 44), die eine einzige Trennebene (E_{T}) bilden, und die miteinander wenigsten einen torusförmigen, mit Betriebsmittel befüllbaren Arbeitsraum (6; 45) bilden, wobei die Ankoppelung der beiden Schaufelräder (4, 5; 43, 44) an die Getriebeeingangswelle (E) und den mechanischen Getriebeteil wenigstens über einen Teil des ersten Betriebszustandes derart erfolgt, daß Leistung vom Primärschaufelrad (4; 43) über das Sekundärschaufelrad (5; 43) auf den mechanischen Getriebeteil (3; 42) übertragen wird;
**gekennzeichnet durch** die folgenden Merkmale:
1.6 das Sekundärschaufelrad (5; 44) ist drehfest mit dem mechanischen Getriebeteil (3; 42) verbindbar;
1.7 es sind erste Mittel, umfassend eine dem Primärschaufelrad (4;43) zugeordnete Kupplungseinrichtung (PK) vorgesehen, mittels welcher das Primärschaufelrad (4; 43) über einen Teilbereich des ersten Betriebszustandes an die Getriebeeingangswelle (E) wenigstens mittelbar ankoppelbar ist;
1.8 es sind zweite Mittel, umfassend eine Kupplungseinrichtung (ÜK,46) zur Umgehung des Primärschaufelrades(4;43) vorgesehen, mittels welcher das Sekundärschaufelrad (5; 44) mit der Getriebeeingangswelle (E) koppelbar ist;
1.9 es sind dritte Mittel, umfassend eine Bremseinrichtung (PB), welche in einem zweiten Betriebszustand das Primärschaufelrad (4; 43) gegenüber den feststehenden Getriebeteilen (9) festhält und abstützt, und die das Sekundärschaufelrad (5; 44) mit dem zweiten mechanischen Getriebeteil (3; 42) verbinden, vorgesehen.

2. Getriebebaueinheit (1) nach Anspruch 1, **dadurch gekennzeichnet, daß** das Sekundärschaufelrad (5) drehfest mit dem mechanischen Getriebeteil (3) verbunden ist.

3. Getriebebaueinheit (40) nach Anspruch 1, **gekennzeichnet durch** folgende Merkmale:
3.1 die Kopplung zwischen mechanischen Getriebeteil (42) und dem Sekundärschaufelrad (44) erfolgt wahlweise über zwei Kupplungseinrichtungen - eine erste Kupplungseinrichtung (46) und eine zweite Kupplungseinrichtung (47);
3.2 es ist eine Überbrückungskupplung (ÜK) vorgesehen, mittels welcher die Getriebeeingangswelle (E) unter Umgehung des Sekundärschaufelrades (44) mit dem mechanischen Getriebeteil (42) koppelbar ist.

4. Getriebebaueinheit (1; 40) nach einem der Ansprüche 1 bis 3, **dadurch gekennzeichnet, daß** weitere vierte Mittel zur Ermöglichung einer Drehrichtungsumkehr des Sekundärschaufelrades (5; 44) im zweiten Betriebszustand gegenüber dessen Drehrichtung im Anfahrzustand vorgesehen sind.

5. Getriebebaueinheit (1; 40) nach Anspruch 4, **gekennzeichnet durch** folgende Merkmale:
5.1 der mechanische Getriebeteil (3; 42) umfaßt wenigstens eine Übersetzungsstufe und eine zuschaltbare Umkehrstufe;
5.2 die vierten Mittel werden von den Schaltelementen zur Zuschaltung der Umkehrstufe gebildet.

6. Getriebebaueinheit (1; 40) nach Anspruch 4, **gekennzeichnet durch** folgende Merkmale:
6.1 der mechanische Getriebeteil umfaßt wenigstens ein Umlaufgetriebe;
6.2 die vierten Mittel werden von den, den einzelnen Getriebeelementen zugeordneten Lastschaltelementen gebildet.

7. Getriebebaueinheit (1; 40) nach einem der Ansprüche 5 bis 6, **dadurch gekennzeichnet, daß** das vierte Mittel Kupplungs- (K1, K2, K3) und/oder Bremseinrichtungen (B1, B2, B3) umfaßt, die den einzelnen Bestandteilen des mechanischen Getriebeteils (3; 42) in geeigneter Weise zugeordnet sind.

8. Getriebebaueinheit (25)
8.1 mit einer Getriebeeingangswelle (E) und einer Getriebeausgangswelle (A);
8.2 mit einem ersten hydraulischen Getriebeteil (26);
8.3 mit einem zweiten mechanischen Getriebeteil (27);
8.4 die beiden Getriebeteile (26, 27) sind in Reihe angeordnet;
8.5 der hydraulische Getriebeteil (26) umfaßt eine hydrodynamische Kupplung mit zwei Schaufelrädern - ein Primärschaufelrad (28) und ein Sekundärschaufelrad (29), die eine einzige Trennebene (E_{T}) bilden, und die miteinander wenigsten einen torusförmigen, mit Betriebsmittel befüllbaren Arbeitsraum (30) bilden, wobei die Ankoppelung der beiden Schaufelräder (28, 29) an die Getriebeeingangswelle (E) und den mechanischen Getriebeteil wenigstens über einen Teil des ersten Betriebszustandes derart erfolgt, daß Leistung vom Primärschaufelrad (28) über das Sekundärschaufelrad (28) auf den mechanischen Getriebeteil (27) übertragen wird;
**gekennzeichnet durch** die folgenden Merkmale:
8.6 das Primärschaufelrad (28) ist drehfest mit der Getriebeeingangswelle (E) verbindbar;
8.7 es sind erste Mittel in Form einer Kupplungseinrichtung (ÜK) vorgesehen, mittels welcher die Getriebeeingangswelle (E) mit dem zweiten mechanischen Getriebeteil (27) koppelbar ist;
8.8 es sind zweite Mittel in Form einer Kupplungseinrichtung (TK) vorgesehen, mittels welcher das Sekundärschaufelrad (29) mit der Verbindung zwischen Getriebeeingangswelle (E) und mechanischen Getriebeteil (27) koppelbar ist;
8.9 es sind weitere dritte Mittel, umfassend eine dem Sekundärschaufelrad (29) zugeordnete Bremseinrichtung (TB), welche in einem zweiten Betriebszustand das Sekundärschaufelrad (29) gegenüber den feststehenden Getriebeteilen (9) festhält und abstützt und die das Primärschaufelrad mit dem zweiten mechanischen Getriebeteil (27) verbinden.

9. Getriebebaueinheit (1; 25; 40) nach einem der Ansprüche 1 bis 8, **dadurch gekennzeichnet, daß** die Beschaufelung (4.1, 4.2, 5.1, 5.2) der einzelnen Schaufelräder (4, 5; 28, 29; 43, 44) gegenüber der von Primär- und Sekundärschaufelrad gebildeten Trennebene (E_{T}) geneigt ausgeführt ist.

10. Getriebebaueinheit (1; 25; 40) nach einem der Ansprüche 1 bis 9, **dadurch gekennzeichnet, daß** die ersten und/oder zweiten und/oder dritten und/oder vierten Mittel als Lastschaltelemente ausgeführt sind.

11. Getriebebaueinheit (1; 25; 40) nach Anspruch 10, **dadurch gekennzeichnet, daß** die Lastschaltelemente in Form von Kupplungseinrichtungen (K1, K2, K3) und/oder Bremseinrichtungen (B1, B2, B3), umfassend wenigstens zwei aneinander anpreßbare Reibelemente, gebildet werden.

12. Getriebebaueinheit (1; 25; 40) nach einem der Ansprüche 1 bis 11 **gekennzeichnet durch** folgende Merkmale:
12.1 die Getriebebaueinheit (1; 25; 40) umfaßt ein, den hydrodynamischen (2; 41) und mechanischen Getriebeteil (3; 42) umschließendes Gehäuse (9);
12.2 die Bremseinrichtung (PB; TB) stützt sich am Gehäuse (9) ab.

13. Getriebebaueinheit (1; 25; 40) nach einem der Ansprüche 1 bis 12; **dadurch gekennzeichnet, daß** der mechanische Getriebeteil (3; 27; 42) wenigstens eine Stimradstufe umfaßt.

14. Getriebebaueinheit (1; 25; 40) nach einem der Ansprüche 1 bis 13 **dadurch gekennzeichnet, daß** der mechanische Getriebeteil (3; 27; 42) wenigstens einen Planetenradsatz (PRI, PRI, PRIII) mit wenigstens einem Hohlrad (Ib; IIb; IIIb), einem Sonnenrad (la, IIa, IIIa), Planetenrädern (Ic, IIc, IIIc) und einem Steg (Id, IId,IIId) umfaßt.

15. Getriebebaueinheit (1; 25; 40) nach Anspruch 14, **gekennzeichnet durch** die folgenden Merkmale:
15.1 der mechanische Getriebeteil (3; 27; 42) umfaßt wenigstens drei miteinander gekoppelte Planetenradsätze - einen ersten Planetenradsatz (PRI), einen zweiten Planetenradsatz (PRII) und einen dritten Planetenradsatz (PRIII);
15.2 jeweils ein erstes und jeweils ein zweites Getriebeelement des ersten und zweiten Planetenradsatzes (PRI, PRII) sind miteinander drehfest verbunden;
15.3 das erste Getriebeelement des ersten Planetenradsatzes (PRI) ist zusätzlich mit einem ersten Getriebeelement des dritten Planetenradsatzes (PR III) drehfest verbunden;
15.4 ein weiteres drittes Getriebeelement des ersten Planetenradsatzes (PRI) ist mittels einer ersten Kupplungseinrichtung (K1) mit dem Sekundärschaufelrad (5; 29; 44) koppelbar;
15.5 das zweite Getriebeelement des ersten Planetenradsatzes (PRI) ist mittels einer zweiten Kupplungseinrichtung (K2) mit dem Sekundärschaufelrad (5; 29; 44) koppelbar;
15.6 das zweite Getriebeelement des ersten Planetenradsatzes (PRI) ist mittels einer ersten Bremseinrichtung (B1) feststellbar;
15.7 ein drittes Getriebeelement des zweiten Planetenradsatzes (PRII) ist mittels einer zweiten Bremseinrichtung (B2) und ein drittes Getriebeelement des dritten Planetenradsatzes (PRIII) mittels einer dritten Bremseinrichtung (BB) feststellbar;
15.8 das zweite Getriebeelement des dritten Planetenradsatzes (PRIII) ist mit der Getriebeausgangswelle (A) drehfest verbunden und mittels eines dritten Kupplungselementes (K3) mit dem dritten Getriebeelement des dritten Planetenradsatzes (PRIII) koppelbar.

16. Getriebebaueinheit (1; 25; 40) nach Anspruch 15, **gekennzeichnet durch** die folgenden Merkmale:
16.1 das erste Getriebeelement des ersten Planetenradsatzes (PRI) wird vom Sonnenrad (la) gebildet;
16.2 das zweite Getriebeelement des ersten Planetenradsatzes (PRI) wird vom Steg (Id) gebildet;
16.2.1 das dritte Getriebeelement des ersten Planetenradsatzes (PRI) wird vom Hohlrad (Ib) gebildet

17. Getriebebaueinheit (1; 25; 40) nach einem der Ansprüche 15 oder 16, **gekennzeichnet durch** die folgenden Merkmale:
17.1 das erste Getriebeelement des zweiten Planetenradsatzes (PRII) wird vom Sonnenrad (IIa) gebildet;
17.2 das zweite Getriebeelement des zweiten Planetenradsatzes (PRII) wird vom Hohlrad (IIb) gebildet;
17.3 das dritte Getriebeelement des zweiten Planetenradsatzes (PRII) wird vom Steg (IId) gebildet.

18. Getriebebaueinheit (1; 25; 40) nach einem der Ansprüche 15 bis 17, **gekennzeichnet durch** die folgenden Merkmale:
18.1 das erste Getriebeelement des dritten Planetenradsatzes (PRIII) wird vom Sonnenrad (IIIa) gebildet;
18.2 das zweite Getriebeelement des dritten Planetenradsatzes (PRIII) wird vom Steg (IIId) gebildet;
18.3 das dritte Getriebeelement des dritten Planetenradsatzes (PRIII) wird vom Hohlrad (IIIb) gebildet.

19. Getriebebaueinheit (1; 25; 40) nach einem der Ansprüche 1 bis 18, **dadurch gekennzeichnet, daß** dem hydraulischen Getriebeteil (2; 26; 41) in Kraftflußrichtung ein Dämpfungselement (21) vorgeschaltet ist.

20. Getriebebaueinheit (1; 25; 40) nach Anspruch 19, **gekennzeichnet durch** die folgenden Merkmale:
20.1 die Dämpfungseinrichtung (21) ist scheibenförmig ausgebildet;
20.2 die Dämpfungseinrichtung (21) umfaßt eine Vielzahl von auf einem bestimmten Durchmesser angeordneten Drehmomentstützen (22) und dazwischen angeordneten Federeinrichtungen (23).

21. Getriebebaueinheit (1; 25; 40) nach einem der Ansprüche 19 oder 20, **dadurch gekennzeichnet, daß** die Dämpfungseinrichtung (21) in einem Bereich, der durch den äußeren Umfang des Primärschaufelrades (4; 28; 43) und der Anordnung der Primärschaufelradkupplung (PK) gebildet wird, angeordnet ist.

22. Verfahren zum Betreiben einer in einem Antriebsstrang zwischen Antrieb und Abtrieb integrierten Getriebebaueinheit (1; 25; 40), gemäß einem der Ansprüche 1 bis 21, umfassend einen mechanischen Getriebeteil (3; 27; 42) und einen hydraulischen Getriebeteil (2; 26; 41) in Form einer hydrodynamischen Kupplung (5; 29; 44) - zur Realisierung wenigstens zweier Betriebszustände - einem ersten Betriebszustand "Fahren" und einem zweiten Betriebszustand "Bremsen";
22.1 wobei im ersten Betriebszustand wenigstens zwei Gangstufen realisiert werden
22.1.1. eine erste Anfahrstufe, in welcher der hydraulische Getriebeteil mit dem mechanischen Getriebeteil in Reihe geschaltet wird und
22.1.2 eine zweite Gangstufe, in welcher der mechanische Getriebeteil mit der Getriebeeingangswelle gekoppelt wird;
22.2 bei welchen der Bremsbetrieb hydraulisch realisiert wird;
**gekennzeichnet durch** die folgenden Merkmale:
22.3 bei welchem im ersten Betriebszustand wenigstens im Anfahrvorgang der hydraulische Getriebeteil (2; 26; 41) als hydrodynamische Kupplung betrieben wird, indem das Primärschaufelrad (4; 28; 43) mit der Getriebeeingangswelle (E) wenigstens mittelbar drehfest gekoppelt wird und das Sekundärschaufelrad (5; 29; 44) mit der Getriebeausgangswelle (A) über dem mechanischen Getriebeteil (3; 27; 42) verbunden wird;
22.4 bei welchem im zweiten Betriebszustand der hydraulische Getriebeteil (2; 26; 41) als hydrodynamischer Retarder betrieben wird, in dem eines der beiden Schaufelräder (4, 5; 28, 29; 43, 44) im wesentlichen im Stillstand festgehalten wird und das andere der beiden Schaufelräder (5, 4; 29, 28; 44, 43) von der Getriebeausgangswelle (A) angetrieben wird;
22.5 und wobei die Beschaufelung (4.1, 4.2, 5.1, 5.2) von Primär- und Sekundärschaufelrad (4, 5; 28, 29; 43, 44) derart geneigt gegenüber der zwischen Primär- und Sekundärschaufelrad gebildeten Trennebene (E_{T}) ausgeführt ist, daß aufgrund der Schaufelrichtung bei wenigstens teilweiser Befüllung des hydraulischen Getriebeteiles (2; 27; 41) und Koppelung des Primärschaufelrades (4; 28; 43) mit der Getriebeeingangswelle (E) beide Schaufelräder (4, 5; 28, 29; 43, 44) im spießenden Betrieb betrieben werden.

23. Verfahren nach Anspruch 22, **gekennzeichnet durch** die folgenden Merkmale:
23.1 bei welchem der Arbeitsraum (6; 45; 30) des hydraulischen Getriebeteils (2; 27; 41) wenigstens im Verlauf einer zweiten Gangstufe des ersten Betriebszustandes vollständig entleert wird;
23.2 bei welchem das Primärschaufelrad (4; 28; 43) mit dem Sekundärschaufelrad (5; 29; 44) wenigstens ab diesem Zeitpunkt der Entleerung des Arbeitsraumes (6; 45; 30) mechanisch gekoppelt wird.

24. Verfahren nach Anspruch 23, **dadurch gekennzeichnet, daß** das Primärschaufelrad (4; 28; 43) oder das Sekundärschaufelrad (5; 29; 44) ab dem Zeitpunkt der Entleerung des Arbeitsraumes (6; 30; 45) mit der Getriebeeingangswelle (E) gekoppelt wird.

25. Verfahren nach einem der Ansprüche 22 bis 24, **gekennzeichnet durch** folgende Merkmale:
25.1 bei welchem bei Festsetzung des Primärschaufelrades (4; 28; 43) und wenigstens teilweiser Befüllung des Arbeitsraumes (6; 30; 45) des hydraulischen Getriebeteiles (3; 27; 42) das Sekundärschaufelrad (5; 29; 44) mit beibehaltener Drehrichtung gegenüber der Beschaufelung des Primärschaufelrades (4; 28; 43) fliehend angetrieben wird.

26. Verfahren nach einem der Ansprüche 22 bis 24, **gekennzeichnet durch** folgende Merkmale:
26.1 die Beschaufelung (4.1, 4.2, 5.1, 5.2) von Primär- und Sekundärschaufelrad (4, 5; 28, 29; 43, 44) ist derart geneigt gegenüber der zwischen Primär- und Sekundärschaufelrad gebildeten Trennebene (E_{T}) ausgeführt, daß aufgrund der Schaufelrichtung
26.1.1 bei wenigstens teilweiser Befüllung des hydraulischen Getriebeteiles (3; 27; 42) und Koppelung des Primärschaufelrades (4; 28; 43) mit der Getriebeeingangswelle (E) das Primärschaufelrad (4; 28; 43) spießend gegenüber dem Sekundärschaufelrad (5; 29; 44) betrieben wird;
26.1.2 bei welchem bei Festsetzung des Primärschaufelrades (4; 28; 43), wenigstens teilweiser Befüllung des Arbeitsraumes (6, 30; 45) und Einlegung einer Rückwärtsgangstufe das Sekundärschaufelrad (5; 29; 44) gegenüber der Beschaufelung des Primärschaufelrades (4; 28; 43) spießend betrieben wird.

27. Verfahren nach einem der Ansprüche 22 bis 24, **gekennzeichnet durch** folgende Merkmale:
27.1 die Beschaufelung (4.1, 4.2, 5.1, 5.2)von Primär- und Sekundärschaufelrad (4, 5; 28, 29; 43, 44) ist derart geneigt gegenüber der zwischen Primär- und Sekundärschaufelrad (4, 5; 28, 29; 43, 44) gebildeten Trennebene (E_{T}) ausgeführt, daß aufgrund der Schaufelrichtung bei Festsetzung des Sekundärschaufelrades und wenigstens teilweiser Befüllung des Arbeitsraumes des hydraulischen Getriebeteiles das Primärschaufelrad mit beibehaltener Drehrichtung gegenüber der Beschaufelung des Sekundärschaufelrades im spießenden Betrieb angetrieben wird.

28. Hydrodynamische Baueinheit zum Einbau in einem Antriebsstrang zwischen einer antreibenden Welle und einer anzutreibenden Welle
28.1 mit einer hydrodynamischen Kupplung mit wenigstens zwei Schaufelrädern - einem Primärschaufelrad und einem Sekundärschaufelrad-, die eine einzige Trennebene (E_{T}) bilden, und die miteinander wenigstens einen torusförmigen Arbeitsraum bilden;
28.2 mit einem, die beiden Schaufelräder umschließenden Gehäuse;
**gekennzeichnet durch** die folgenden Merkmale:
28.3 einem der ersten beiden Schaufelräder - Primärschaufelrad oder Sekundärschaufelrad - ist wenigstens ein Schaltelement zur wahlweisen Kopplung und Entkopplung an die antreibende Welle zugeordnet;
28.4 dem ersten Schaufelrad ist wenigstens eine am Gehäuse befestigbare Einrichtung zur Feststellung und Abstützung zugeordnet.

29. Hydrodynamische Baueinheit nach Anspruch 28, **dadurch gekennzeichnet, daß** die Beschaufelung von Primär- und Sekundärschaufelrad geneigt gegenüber der zwischen Primär- und Sekundärschaufelrad gebildeten Trennebene verläuft.

## Claims

1. Transmission unit (1; 40) for drive units for producing at least two operating states - a first operating state for power transmission with at least two gear shift stages and a second operating state for deceleration;
1.1 with a transmission input shaft (E) and a transmission output shaft (A);
1.2 with a first hydraulic transmission part (2; 41);
1.3 with a second mechanical transmission part (3; 42);
1.4 the two transmission parts (2, 3; 41, 42) are arranged in series;
1.5 the hydraulic transmission part (2; 41) comprises a hydrodynamic coupling with two bladed wheels - a primary bladed wheel (4; 43) and a secondary bladed wheel (5; 44) which form a single parting plane (E_{T}) and together form at least one toroidal working chamber (6; 45) fillable with operating medium, the two bladed wheels (4, 5; 43, 44) being attached to the transmission input shaft (E) and the mechanical transmission part at least over a part of the first operating state such that power is transmitted from the primary bladed wheel (4; 43) via the secondary bladed wheel (5; 43) to the mechanical transmission part (3; 42);
**characterised by** the following features:
1.6 the secondary bladed wheel (5; 44) may be connected non-rotatably to the mechanical transmission part (3; 42);
1.7 first means are provided which comprise a coupling device (PK) which is associated with the primary bladed wheel (4; 43) and by means of which the primary bladed wheel (4; 43) may be attached over a portion of the first operating state at least indirectly to the transmission input shaft (E);
1.8 second means are provided which comprise a coupling device (ÜK, 46) for bypassing the primary bladed wheel (4; 43) by means of which the secondary bladed wheel (5; 44) may be coupled to the transmission input shaft (E);
1.9 third means are provided which comprise a brake device (PB) to hold and support the primary bladed wheel (4; 43) relative to the stationary transmission parts (9) in a second operating state and to connect the secondary bladed wheel (5; 44) to the second mechanical transmission part (3; 42).

2. Transmission unit (1) according to claim 1, **characterised in that** the secondary bladed wheel (5) is connected non-rotatably to the mechanical transmission part (3).

3. Transmission unit (40) according to claim 1, **characterised by** the following features:
3.1 the mechanical transmission part (42) and secondary bladed wheel (44) are coupled selectively via two coupling devices - a first coupling device (46) and a second coupling device (47);
3.2 a lock-up clutch (ÜK) is provided by means of which the transmission input shaft (E) may be coupled to the mechanical transmission part (42) while bypassing the secondary bladed wheel (44).

4. Transmission unit (1; 40) according to any of claims 1 to 3, **characterised in that** further fourth means are provided to allow a reversal of the direction of rotation of the secondary bladed wheel (5; 44) in the second operating state from its direction of rotation in the starting state.

5. Transmission unit (1; 40) according to claim 4, **characterised by** the following features:
5.1 the mechanical transmission part (3; 42) comprises at least one transmission stage and one connectable reversing stage;
5.2 the fourth means are formed by the shift elements for connecting the reversing stage.

6. Transmission unit (1; 40) according to claim 4, **characterised by** the following features:
6.1 the mechanical transmission part comprises at least one planetary gear;
6.2 the fourth means are formed by the load switching elements associated with the individual transmission elements.

7. Transmission unit (1; 40) according to any of claims 5 to 6, **characterised in that** the fourth means comprises coupling (K1, K2, K3) and/or brake devices (B1, B2, B3) which are associated with the individual components of the mechanical transmission part (3; 42) in a suitable manner.

8. Transmission unit (25)
8.1 with a transmission input shaft (E) and a transmission output shaft (A);
8.2 with a first hydraulic transmission part (26);
8.3 with a second mechanical transmission part (27);
8.4 the two transmission parts (26, 27) are arranged in series;
8.5 the hydraulic transmission part (26) comprises a hydrodynamic coupling with two bladed wheels - a primary bladed wheel (28) and a secondary bladed wheel (29) which form a single parting plane (E_{T}) and together form at least one toroidal working chamber (30) fillable with operating medium, the two bladed wheels (28, 29) being attached to the transmission input shaft (E) and the mechanical transmission part at least over a part of the first operating state such that power is transmitted from the primary bladed wheel (28) via the secondary bladed wheel (28) to the mechanical transmission part (27);
**characterised by** the following features:
8.6 the primary bladed wheel (28) may be connected non-rotatably to the transmission input shaft (E);
8.7 first means in the form of a coupling device (ÜK) are provided by means of which the transmission input shaft (E) can be coupled to the second mechanical transmission part (27);
8.8 second means in the form of a coupling device (TK) are provided by means of which the secondary bladed wheel (29) can be coupled to the connection between transmission input shaft (E) and mechanical transmission part (27);
8.9 there are further third means which comprise a brake device (TB) associated with the second bladed wheel (29) to hold and support the secondary bladed wheel (29) relative to the stationary transmission parts (9) in a second operating state and to connect the primary bladed wheel to the second mechanical transmission part (27).

9. Transmission unit (1; 25; 40) according to any of claims 1 to 8, **characterised in that** the blades (4.1, 4.2, 5.1, 5.2) of the individual bladed wheels (4, 5; 28, 29; 43, 44) are constructed at an inclination to the parting plane (E_{T}) formed by the primary and secondary bladed wheel.

10. Transmission unit (1; 25; 40) according to any of claims 1 to 9, **characterised in that** the first and/or second and/or third and/or fourth means are constructed as load switching elements.

11. Transmission unit (1; 25; 40) according to claim 10, **characterised in that** the load switching elements are made in the form of coupling devices (K1, K2, K3) and/or brake devices (B1, B2, B3) comprising at least two friction elements which may be pressed against one another.

12. Transmission unit (1; 25; 40) according to any of claims 1 to 11, **characterised by** the following features:
12.1 the gear unit (1; 25; 40) comprises a housing (9) surrounding the hydrodynamic transmission part (2; 41) and mechanical transmission part (3; 42);
12.2 the brake device (PB; TB) rests on the housing (9).

13. Transmission unit (1; 25; 40) according to any of claims 1 to 12, **characterised in that** the mechanical transmission part (3; 27; 42) comprises at least one spur wheel stage.

14. Transmission unit (1; 25; 40) according to any of claims 1 to 13, **characterised in that** the mechanical transmission part (3; 27; 42) comprises at least one set of planet wheels (PRI, PRI, PRIII) with at least one ring gear (Ib; IIb; IIIb), a sun wheel (Ia, IIa, IIIa), planet wheels (Ic, IIc, IIIc) and a web (Id, IId, IIId).

15. Transmission unit (1; 25; 40) according to claim 14, **characterised by** the following features:
15.1 the mechanical transmission part (3; 27; 42) comprises at least three mutually coupled sets of planet wheels - a first set of planet wheels (PRI), a second set of planet wheels (PRII) and a third set of planet wheels (PRIII);
15.2 a first respective transmission element and a second respective transmission element of the first and second set of planet wheels (PRI, PRII) are non-rotatably connected to one another;
15.3 the first transmission element of the first set of planet wheels (PRI) is additionally non-rotatably connected to a first transmission element of the third set of planet wheels (PRIII);
15.4 a further third transmission element of the first set of planet wheels (PRI) may be coupled to the secondary bladed wheel (5; 29; 44) by means of a first coupling device (K1);
15.5 the second transmission element of the first set of planet wheels (PRI) may be coupled to the secondary bladed wheel (5; 29; 44) by means of a second coupling device (K2);
15.6 the second transmission element of the first set of planet wheels (PRI) may be locked by means of a first brake device (B1) ;
15.7 a third transmission element of the second set of planet wheels (PRII) may be locked by means of a second brake device (B2) and a third transmission element of the third set of planet wheels (PRIII) by means of a third brake device (BB);
15.8 the second transmission element of the third set of planet wheels (PRIII) is non-rotatably connected to the transmission output shaft (A) and may be coupled to the third transmission element of the third set of planet wheels (PRIII) by means of a third coupling element (K3).

16. Transmission unit (1; 25; 40) according to claim 15, **characterised by** the following features:
16.1 the first transmission element of the first set of planet wheels (PRI) is formed by the sun wheel (1a);
16.2 the second transmission element of the first set of planet wheels (PRI) is formed by the web (1d);
16.2.1 the third transmission element of the first set of planet wheels (PRI) is formed by the ring gear (1b).

17. Transmission unit (1; 25; 40) according to either of claims 15 or 16, **characterised by** the following features:
17.1 the first transmission element of the second set of planet wheels (PRII) is formed by the sun wheel (IIa);
17.2 the second transmission element of the second set of planet wheels (PRII) is formed by the ring gear (IIb);
17.3 the third transmission element of the second set of planet wheels (PRII) is formed by the web (IId).

18. Transmission unit (1; 25; 40) according to any of claims 15 to 17, **characterised by** the following features:
18.1 the first transmission element of the third set of planet wheels (PRIII) is formed by the sun wheel (IIIa);
18.2 the second transmission element of the third set of planet wheels (PRIII) is formed by the web (IIId);
18.3 the third transmission element of the third set of planet wheels (PRIII) is formed by the ring gear (IIIb).

19. Transmission unit (1; 25; 40) according to any of claims 1 to 18, **characterised in that** the hydraulic transmission part (2; 26; 41) is preceded by a damping element (21) in the direction of flow of the force.

20. Transmission unit (1; 25; 40) according to claim 19, **characterised by** the following features:
20.1 the damping device (21) is disc-shaped in construction;
20.2 the damping device (21) comprises a large number of torque bearings (22) arranged over a certain diameter and spring devices (23) arranged in-between.

21. Transmission unit (1; 25; 40) according to either of claims 19 or 20, **characterised in that** the damping device (21) is arranged in a region formed by the outer periphery of the primary bladed wheel (4; 28; 43) and the arrangement of the primary bladed wheel coupling (PK).

22. Method of operating a transmission unit (1; 25; 40) integrated in a power train between input and output according to any of claims 1 to 21, comprising a mechanical transmission part (3; 27; 42) and a hydraulic transmission part (2; 26; 41) in the form of a hydrodynamic coupling (5; 29; 44) for producing at least two operating states - a first operating state "drive" and a second operating state "brake";
22.1 wherein at least two gear stages are produced in the first operating state
22.1.1 a first starting stage in which the hydraulic transmission part is connected in series with the mechanical transmission part and
22.1.2 a second gear stage in which the mechanical transmission part is coupled to the transmission input shaft;
22.2 in which braking is carried out hydraulically;
**characterised by** the following features:
22.3 in which in the first operating state the hydraulic transmission part (2; 26; 41) is operated as a hydrodynamic coupling at least in the starting process in that the primary bladed wheel (4; 28; 43) is non-rotatably coupled at least indirectly with the transmission input shaft (E) and the secondary bladed wheel (5; 29; 44) is connected to the transmission output shaft (A) via the mechanical transmission part (3; 27; 42);
22.4 in which in the second operating state the hydraulic transmission part (2; 26; 41) is operated as a hydrodynamic retarder in which one of the two bladed wheels (4, 5; 28, 29; 43, 44) is kept substantially stationary and the other of the two bladed wheels (5, 4; 29, 28; 44, 43) is driven by the transmission output shaft (A);
22.5 and wherein the blades (4.1, 4.2, 5.1, 5.2) of primary and secondary bladed wheel (4, 5; 28, 29; 43, 44) are constructed at such an inclination to the parting plane (E_{T}) formed between primary and secondary bladed wheel that the two bladed wheels (4, 5; 28, 29; 43, 44) are operated in spiking mode when the hydraulic transmission part (2; 27; 41) is at least partially filled and the primary bladed wheel (4; 28; 43) is coupled to the transmission input shaft (E) owing to the direction of the blades.

23. Method according to claim 22, **characterised by** the following features:
23.1 in which the working chamber (6; 45; 30) of the hydraulic transmission part (2; 27; 41) is completely emptied at least in the course of a second gear stage of the first operating state;
23.2 in which the primary bladed wheel (4; 28; 43) is mechanically coupled to the secondary bladed wheel(5; 29; 44) at least from this moment of emptying the working chamber (6; 45; 30).

24. Method according to claim 23, **characterised in that** the primary bladed wheel (4; 28; 43) or the secondary bladed wheel (5; 29; 44) is coupled to the transmission input shaft (E) from the moment of emptying of the working chamber (6; 30; 45).

25. Method according to any of claims 22 to 24, **characterised by** the following features:
25.1 in which the secondary bladed wheel (5; 29; 44) is driven centrifugally when the direction of rotation is retained in relation to the blades of the primary bladed wheel (4; 28; 43) when the primary bladed wheel (4; 28; 43) is fixed and the working chamber (6; 30; 45) of the hydraulic transmission part (3; 27; 42) is at least partially filled.

26. Method according to any of claims 22 to 24, **characterised by** the following features:
26.1 the blades (4.1, 4.2, 5.1, 5.2) of primary and secondary bladed wheel (4, 5; 28, 29; 43, 44) are constructed at an inclination to the parting plane (E_{T}) formed between primary and secondary bladed wheel such that, owing to the direction of the blades
26.1.1 the primary bladed wheel (4; 28; 43) is operated in a spiking mode in relation to the secondary bladed wheel (5; 29; 44) when the hydraulic transmission part (3; 27; 42) is at least partially filled and the primary bladed wheel (4; 28; 43) is coupled to the transmission input shaft (E);
26.1.2 in which the secondary bladed wheel (5; 29; 44) is operated in a spiking mode in relation to the blades of the primary bladed wheel (4; 28; 43) when the primary bladed wheel (4; 28; 43) is fixed, the working chamber (6, 30; 45) is at least partially filled and a reverse gear stage is engaged.

27. Method according to any of claims 22 to 24, **characterised by** the following features:
27.1 the blades (4.1, 4.2, 5.1, 5.2) of primary and secondary bladed wheel (4, 5; 28, 29; 43, 44) are constructed at an inclination to the parting plane (E_{T}) formed between primary and secondary bladed wheel (4, 5; 28, 29; 43, 44) such that, owing to the direction of the blades the primary bladed wheel is operated in spiking mode when the direction of rotation is retained in relation to the blades of the secondary bladed wheel when the secondary bladed wheel is fixed and the working chamber of the hydraulic transmission part is at least partially filled.

28. Hydrodynamic unit for installation in a power train between a driving shaft and a driven shaft
28.1 with a hydrodynamic coupling comprising at least two bladed wheels - a primary bladed wheel and a secondary bladed wheel - which form a single parting plane (E_{T}) and together form at least one toroidal working chamber;
28.2 with a housing surrounding the two bladed wheels;
**characterised by** the following features:
28.3 at least one switching element for selective coupling to and release from the driving shaft is associated with one of the first two bladed wheels - primary bladed wheel or secondary bladed wheel;
28.4 at least one device which may be fastened on the housing for locking and support is associated with the first bladed wheel.

29. Hydrodynamic unit according to claim 28, **characterised in that** the blades of primary and secondary bladed wheel extend at an inclination to the parting plane formed between primary and secondary bladed wheel.

## Revendications

1. Unité de transmission (1; 40) pour unités d'entraînement, destinée à réaliser au moins deux régimes de fonctionnement - un premier régime de transmission de puissance avec au moins deux étages de vitesses et un deuxième régime de freinage ;
1.1 avec un arbre d'entrée (E) et un arbre de sortie (A) ;
1.2 avec une première partie de transmission hydraulique (2 ; 41) ;
1.3 avec une deuxième partie de transmission mécanique (3 ; 42) ;
1.4 les deux parties de transmission (2,3 ; 41,42) sont montées en série ;
1.5 la partie de transmission hydraulique (2 ; 41) comporte un accouplement hydrodynamique avec deux roues à aubes - une roue à aubes primaire (4 ; 43) et une roue à aubes secondaire (5 ; 44) - qui constituent un plan unique de séparation (E_{T}) et forment ensemble au moins un espace de travail (6 ; 45) adapté à être rempli de fluide de service, l'accouplement des deux roues à aubes (4, 5 ; 43, 44) à l'arbre d'entrée (E) et à la partie de transmission mécanique étant réalisé au moins pour une partie du premier régime de fonctionnement, de sorte que de la puissance soit transmise de la roue à aubes primaire (4 ; 43) à la partie de transmission mécanique (3 ; 42) par la roue à aubes secondaire (5 ; 44) ;
1.6 la roue à aubes secondaire (5 ; 44) est adaptée à être reliée de manière solidaire en rotation à la partie de transmission mécanique (3 ; 42) ;
1.7 il est prévu des premiers moyens comportant un mécanisme d'accouplement (PK) affecté à la roue à aubes primaire (4 ;43) grâce auquel la roue à aubes primaire (4 ;43) peut être accouplée au moins indirectement à l'arbre d'entrée (E) pour une partie du premier régime de fonctionnement ;
1.8 il est prévu des deuxièmes moyens comportant un mécanisme d'accouplement (ÜK, 46) pour contournement de la roue à aubes primaire (4 ; 43), grâce auquel la roue à aubes secondaire (5 ; 44) est adaptée à être accouplée à l'arbre d'entrée (E) ;
1.9 il est prévu des troisièmes moyens incluant un mécanisme de freinage (PB) qui dans un deuxième régime de fonctionnement immobilise la roue à aubes primaire (4 ; 43) et lui offre appui par rapport aux parties fixes de la transmission (9), lesquels moyens reliant la roue à aubes secondaire (5 ; 44) au deuxième a partie de transmission mécanique (3 ; 42).

2. Unité de transmission (1) selon la revendication 1, **caractérisée en ce que** la roue à aubes secondaire (5) est reliée de manière solidaire en rotation avec la partie de transmission mécanique (3).

3. Unité de transmission (40) selon la revendication 1, **caractérisée par** les particularités suivantes :
3.1 l'accouplement entre la partie de transmission mécanique (42) et la roue à aubes secondaire (44) est réalisé de manière facultative par l'intermédiaire de deux mécanismes d'accouplement - un premier mécanisme d'accouplement (46) et un deuxième mécanisme d'accouplement (47) - ;
3.2 il est prévu un accouplement de pontage (ÜK) au moyen duquel l'arbre d'entrée (E) peut être accouplé avec la partie de transmission mécanique (42) par dérivation de la roue à aubes secondaire (44).

4. Unité de transmission (1 ; 40) selon l'une des revendications 1 à 3, **caractérisée en ce que** des quatrièmes moyens encore sont prévus pour permettre une inversion du sens de rotation de la roue à aubes secondaire (5 ; 44) dans le deuxième régime de fonctionnement par rapport à son sens de rotation au démarrage.

5. Unité de transmission (1 ; 40) selon la revendication 4, **caractérisée par** les particularités suivantes :
5.1 la partie de transmission mécanique (3 ; 42) comprend au moins un étage multiplicateur et un étage inverseur adapté à être mis en/hors circuit ;
5.2 les quatrièmes moyens sont constitués des éléments de circuit destinés à la mise en/hors circuit de l'étage inverseur.

6. Unité de transmission (1 ; 40) selon la revendication 4, **caractérisée par** les particularités suivantes :
6.1 la partie de transmission mécanique comprend au moins un engrenage planétaire ;
6.2 les quatrièmes moyens sont formés par les éléments de commutation en charge affectés aux différents éléments de transmission.

7. Unité de transmission (1 ; 40) selon l'une des revendications 5 ou 6, **caractérisée en ce que** le quatrième moyen comporte des mécanismes d'accouplement (K1, K2, K3) et/ou des mécanismes de freinage (B1/ B2, B3) qui sont affectés de manière appropriée aux différentes composantes de la partie mécanique de transmission (3 ; 42).

8. Unité de transmission (25)
8.1 avec un arbre d'entrée (E) et un arbre de sortie (A) ;
8.2 avec une première partie de transmission hydraulique (26) ;
8.3 avec une deuxième partie de transmission mécanique (27) ;
8.4 les deux parties de transmission (26, 27) sont montées en série ;
8.5 la partie de transmission hydraulique (26) comprend un accouplement hydrodynamique avec deux roues à aubes - une roue à aubes primaire (28) et une roue à aubes secondaire (29) - qui constituent un plan unique de séparation (E_{T}) et forment ensemble au moins un espace de travail torique (30) adapté à être rempli de fluide de service, l'accouplement des deux roues à aubes (28, 29) à l'arbre d'entrée (E) et à la partie de transmission mécanique étant réalisé au moins pour une partie du premier régime de fonctionnement, de sorte que de la puissance est transmise de la roue à aubes primaire (28) sur la partie de transmission mécanique (27) par la roue à aubes secondaire (29) ;
**caractérisée par** les particularités suivantes :
8.6 la roue à aubes primaire (28)est adaptée à être reliée de manière solidaire en rotation avec l'arbre d'entrée (E);
8.7 il est prévu des premiers moyens sous la forme d'un mécanisme d'accouplement (ÜK) grâce auquel l'arbre d'entrée (E) est adapté à être accouplé avec le deuxième a partie de transmission mécanique (27) ;
8.8 il est prévu des deuxièmes moyens sous la forme d'un mécanisme d'accouplement (TK) grâce auquel la roue à aubes (29) secondaire est adaptée à être accouplée avec la jonction entre l'arbre d'entrée (E) et la partie de transmission mécanique (27) ;
8.9 il est prévu des troisièmes moyens comportant un mécanisme de freinage (TB) affecté à une roue à aubes secondaire (29) qui dans un deuxième régime de fonctionnement immobilise la roue à aubes secondaire (29) et l'appuie contre les parties fixes de la transmission (9) et qui relient la roue à aubes primaire avec la deuxième partie de la transmission (27) mécanique.

9. Unité de transmission (1 ; 25 ; 40) selon l'une des revendications 1 à 8, **caractérisée en ce que** l'aubage (4.1, 4.2, 5.1, 5.2) des différentes roues à aubes (4, 5 ; 28, 29 ; 43, 44) est incliné par rapport au plan de séparation (E_{T}) formé par les roues à aubes primaire et secondaire.

10. Unité de transmission (1 ; 25 ; 40) selon l'une des revendications 1 à 9, **caractérisée en ce que** les premiers et/ou deuxièmes et/ou troisièmes et/ou quatrièmes moyens sont conçus comme éléments de commutation en charge.

11. Unité de transmission (1 ; 25 ; 40) selon la revendication 10, **caractérisée en ce que** les éléments de commutation en charge se présentent sous forme de mécanismes d'embrayage (K1, K2, K3) et/ou de mécanismes de freinage (B1, B2, B3), comportant au moins deux éléments de friction adaptés à être pressés l'un contre l'autre.

12. Unité de transmission (1 ; 25 ; 40) selon l'une des revendications 1 à 11, **caractérisée par** les particularités suivantes :
12.1 l'unité de transmission (1 ; 25 ; 40) comporte un carter (9) entourant la partie de transmission hydrodynamique (2 ; 41) et la partie de transmission mécanique (3 ; 42) ;
12.2 le mécanisme de freinage (PB ; TB) prend appui sur le carter (9).

13. Unité de transmission (1 ; 25 ; 40) selon l'une des revendications 1 à 12, **caractérisée en ce que** la partie de transmission mécanique (3 ; 27 ; 42) comporte au moins un étage à roue frontale.

14. Unité de transmission (1 ; 25 ; 40) selon l'une des revendications 1 à 13, **caractérisée en ce que** la partie de transmission mécanique (3 ; 27 ; 42) comporte au moins un ensemble de roues planétaires (PRI, PRII, PRIII) avec au moins une couronne de train planétaire (Ib ; IIb ; IIIb), une roue solaire (Ia, IIa, IIIa), des roues planétaires (Ic, Iic, IIIc) et une traverse (Id, Iid, IIId).

15. Unité de transmission (1 ; 25 ; 40) selon la revendication 14, **caractérisée par** les particularités suivantes :
15.1 La partie de transmission mécanique (3 ; 27 ; 42) comporte au moins trois jeux de roues planétaires mutuellement accouplés - un premier jeu de roues planétaires (PRI), un deuxième jeu de roues planétaires (PRII) et un troisième jeu de roues planétaires (PRII) ;
15.2 un premier et un deuxième élément de transmission respectifs dans chacun des premier et deuxième jeux de roues planétaires (PRI, PRII) sont reliés de manière solidaire en rotation entre eux;
15.3 le premier élément de transmission du premier jeu de roues planétaires (PRI) est en outre relié de manière solidaire en rotation à un premier élément de transmission du troisième jeu de roues planétaires (PRIII) ;
15.4 un troisième élément encore de transmission du premier jeu de roues planétaires (PRI) est adapté à être accouplé avec la roue à aubes secondaire (5 ; 29 ; 44) au moyen d'un premier mécanisme d'accouplement (K1) ;
15.5 le deuxième élément de transmission du premier jeu de roues planétaires (PRI) est adapté à être couplé avec la roue à aubes secondaire (5 ; 29 ; 44) au moyen d'un deuxième mécanisme d'accouplement (K2) ;
15.6 le deuxième élément de transmission du premier jeu de roues planétaires (PRI) est adapté à être immobilisé au moyen d'un premier mécanisme de freinage (B1) ;
15.7 un troisième élément de transmission du deuxième jeu de roues planétaires (PRII) est adapté à être immobilisé au moyen d'un deuxième mécanisme de freinage (B2) et un troisième élément de transmission du troisième jeu de roues planétaires (PRIII) est adapté à être immobilisé au moyen d'un troisième mécanisme de freinage (B3) ;
15.8 le deuxième élément de transmission du troisième jeu de roues planétaires (PRIII) est relié de manière solidaire en rotation à l'arbre de sortie (A) et est adapté à être couplé avec le troisième élément de transmission du troisième jeu de roues planétaires (PRIII) au moyen d'un troisième élément d'accouplement (K3).

16. Unité de transmission (1 ; 25 ; 40) selon la revendication 15, **caractérisée par** les particularités suivantes :
16.1 le premier élément de transmission du premier jeu de roues planétaires (PRI) est formé par la roue solaire (Ia) ;
16.2 le deuxième élément de transmission du premier jeu de roues planétaires (PRI) est formé par la traverse (Id) ;
16.2.1 le troisième élément de transmission du premier jeu de roues planétaires (PRI) est formé par la couronne de train planétaire (Ib).

17. Unité de transmission (1 ; 25 ; 40) selon l'une des revendications 15 ou 16, **caractérisée par** les particularités suivantes :
17.1 le premier élément de transmission du deuxième jeu de roues planétaires (PRII) est formé par la roue solaire (IIa) ;
17.2 le deuxième élément de transmission du deuxième jeu de roues planétaires (PRII) est formé par la couronne de train planétaire (IIb) ;
17.3 le troisième élément de transmission du deuxième jeu de roues planétaires (PRII) est formé par la traverse (IId) ;

18. Unité de transmission (1 ; 25 ; 40) selon l'une des revendications 15 à 17, **caractérisée par** les particularités suivantes :
18.1 le premier élément de transmission du troisième jeu de roues planétaires (PRIII) est formé par la roue solaire (IIIa) ;
18.2 le deuxième élément de transmission du troisième jeu de roues planétaires (PRIII) est formé par la traverse (IIId) ;
18.3 le troisième élément de transmission du troisième jeu de roues planétaires (PRIII) est formé par la couronne de train planétaire (IIIb).

19. Unité de transmission (1 ; 25 ; 40) selon l'une des revendications 1 à 18, **caractérisée en ce qu'**un élément d'amortissement (21) est monté en amont de la partie de transmission hydraulique (2 ; 26 ; 41) dans le sens du flux des forces.

20. Unité de transmission (1 ; 25 ; 40) selon la revendication 19, **caractérisée par** les particularités suivantes :
20.1 le mécanisme d'amortissement (21) est configuré en forme de disque ;
20.2 le mécanisme d'amortissement (21) comporte une pluralité d'appuis des couples (22) placés sur un diamètre déterminé et une pluralité de mécanismes à ressort (23) placés entre ces derniers.

21. Unité de transmission (1 ; 25 ; 40) selon l'une des revendications 19 ou 20, **caractérisée en ce que** le mécanisme d'amortissement (21) est placé dans une zone qui est formée par le périmètre extérieur de la roue à aubes primaire (4 ; 28 ; 43) et la structure de l'accouplement de la roue à aubes primaire (PK).

22. Procédé destiné à actionner une unité de transmission (1 ; 25 ; 40) intégrée dans une chaîne cinématique entre partie motrice et partie réceptrice selon l'une des revendications 1 à 21, comportant une partie de transmission mécanique (3 ; 27 ; 42) et une partie de transmission hydraulique (2 ; 26 ; 41) sous forme d'un accouplement hydrodynamique (5 ; 29 ; 44) - pour la réalisation d'au moins deux régimes de fonctionnement - un premier régime de « marche » et un deuxième régime de « freinage » ;
22.1 deux étages de vitesses au moins étant réalisés dans le premier régime de fonctionnement
22.1.1 un premier étage de démarrage, dans lequel la partie de transmission hydraulique est montée en série avec la partie de transmission mécanique et
22.1.2 un deuxième étage de vitesse, où la partie de transmission mécanique est couplée avec l'arbre d'entrée ;
22.2 dans lequel l'actionnement des freins est réalisé de manière hydraulique ;
**caractérisé par** les particularités suivantes :
22.3 dans lequel la partie de transmission hydraulique (2 ; 26 ; 41) est actionnée en tant qu'accouplement hydraulique dans le premier régime de fonctionnement au moins lors du processus de démarrage, la roue à aubes primaire (4 ; 28 ; 43) est accouplée de manière solidaire en rotation au moins indirectement avec l'arbre d'entrée (E) et la roue à aubes secondaire (5 ; 29 ; 44) est reliée à l'arbre de sortie (A) par le biais de la partie de transmission mécanique (3 ; 27 ; 42) ;
22.4 dans lequel dans le deuxième régime de fonctionnement, la partie de transmission hydraulique (2 ; 26 ; 41) est actionnée en tant que ralentisseur hydrodynamique, l'une des deux roues à aubes (4 ,5 ; 28, 29 ; 43, 44) étant maintenue sensiblement à l'arrêt et l'autre des deux roues à aubes (5, 4 ; 29, 28 ; 44, 43) étant entraînée par l'arbre de sortie (A) ;
22.5 et l'aubage (4.1, 4.2, 5.1, 5.2) des roues à aubes primaire et secondaire (4, 5 ; 28, 29 ; 43, 44) étant. incliné par rapport au plan de séparation (E_{T}) formé entre les roues à aubes primaire et secondaire, de sorte que, en raison de la direction des aubes, lors du remplissage au moins partiel de la partie de transmission hydraulique (2 ; 27 ; 41) et de l'accouplement de la roue à aubes primaire (4 ; 28 ; 43), les deux roues à aubes (4, 5 ; 28, 29 ; 43, 44) sont actionnées avec l'arbre d'entrée (E) en mode de fonctionnement intermittent ou par à-coups.

23. Procédé selon la revendication 22, **caractérisé par** les particularités suivantes :
23.1 dans lequel l'espace de travail (6 ; 45 ; 30) de la partie de transmission hydraulique (2 ; 27 ; 41) est vidé totalement au moins pendant le déroulement d'un deuxième étage de vitesse du premier régime de fonctionnement ;
23.2 dans lequel la roue à aubes primaire (4 ; 28 ; 43) est accouplée mécaniquement avec la roue à aubes secondaire (5 ; 29 ; 44) au moins à partir de ce moment d'évacuation de l'espace de travail (6 ; 30 ; 45).

24. Procédé selon la revendication 23, **caractérisé en ce que** la roue à aubes primaire (4 ; 28 ; 43) ou la roue à aubes secondaire (5 ; 29 ; 44) est accouplée avec l'arbre d'entrée (E) à partir du moment où se produit l'évacuation de l'espace de travail.

25. Procédé selon l'une des revendications 22 à 24, **caractérisé par** les particularités suivantes :
25.1 par lequel lors de l'immobilisation de la roue à aubes primaire (4 ; 28 ; 43) et lors du remplissage au moins partiel de l'espace de travail (6 ; 30 ; 45) de la partie de transmission hydraulique (3 ; 27 ; 42), la roue à aubes secondaire (5 ; 29 ; 44) est entraînée sur sa lancée en conservant son sens de rotation par rapport à l'aubage de la roue à aubes primaire (4 ; 28 ; 43).

26. Procédé selon l'une des revendications 22 à 24, **caractérisé par** les particularités suivantes :
26.1 l'aubage (4.1, 4.2, 5.1, 5.2) des roues à aubes primaire et secondaire (4, 5 ; 28, 29 ; 43, 44) est incliné par rapport au plan de séparation (E_{T}) formé entre les roues à aubes primaire et secondaire, de sorte que, en raison de la direction des aubes,
26.1.1 lors du remplissage au moins partiel de l'organe de transmission hydraulique (3 ; 27 ; 42) et de l'accouplement de la roue à aubes primaire (4 ; 28 ; 43) avec l'arbre d'entrée (E), la roue à aubes primaire (4 ; 28 ; 43) est actionnée en mode intermittent par rapport à la roue à aubes secondaire (5 ; 29 ; 44) ;
26.1.2 lors de l'immobilisation de la roue à aubes primaire (4 ; 28 ; 43), du remplissage au moins partiel de l'espace de travail (6 ; 30 ; 45) et de la mise en place d'une marche arrière, la roue à aubes secondaire (5 ; 29 ; 44) est actionnée en mode intermittent par rapport à l'aubage de la roue à aubes primaire (4 ; 28 ; 43).

27. Procédé selon l'une des revendications 22 à 24, **caractérisé par** les particularités suivantes :
27.1 l'aubage (4.1, 4.2, 5.1, 5.2) de la roue à aubes primaire et de la roue à aubes secondaire (4 ; 5 ; 28 ; 29 ; 43 ; 44) est incliné par rapport au plan de séparation (E_{T}) formé entré les roues à aubes primaire et secondaire (4 ; 5 ; 28 ; 29 ; 43 ; 44), de sorte que, en raison de la direction des aubes, lors de l'immobilisation de la roue à aubes secondaire et lors du remplissage au moins partiel de l'espace de travail de la partie de transmission hydraulique, la roue à aubes primaire est entraînée, tout en conservant son sens de rotation, en mode intermittent par rapport à l'aubage de la roue à aubes secondaire.

28. Unité hydrodynamique destinée à être montée dans une chaîne cinématique entre un arbre menant et un arbre mené ;
28.1 avec un accouplement hydrodynamique comportant au moins deux roues à aubes - une roue à aubes primaire et une roue à aubes secondaire - qui constituent un plan unique de séparation (E_{T}) et forment ensemble au moins un espace de travail torique ;
28.2 avec un carter entourant les deux roues à aubes ;
**caractérisée par** les particularités suivantes :
28.3 à l'une des deux premières roues à aubes - roue à aubes primaire ou roue à aubes secondaire - est affecté au moins un élément de commande pour l'accouplement et le désaccouplement au choix avec l'arbre menant ;
28.4 à la première roue à aubes est affecté au moins un mécanisme adapté à être fixé au carter pour immobilisation et prise d'appui.

29. Unité hydrodynamique selon la revendication 28, **caractérisée en ce que** l'aubage de la roue à aubes primaire et de la roue à aubes secondaire est incliné par rapport au plan de séparation formé entre lesdits roues à aubes primaire et secondaire.
